# EUROPEAN PATENT APPLICATION

(11) **EP 4 694 553 A1**
(43) Date of publication of application: **11.02.2026**
(21) Application number: 24780025.3
(22) Date of filing: 22.03.2024
(51) Int. Cl.: H04W 76/15, H04W 4/029, H04W 12/08, H04W 64/00, H04W 92/12

(54) **COMMUNICATION DEVICE, CONTROL DEVICE, AND COMMUNICATION METHOD**

(30) Priority: 29.03.2023 JP 2023054271
(71) Applicant: Sony Group Corporation, Tokyo 108-0075 (JP)
(72) Inventor: TANAKA Yusuke, Tokyo 108-0075 (JP); AIO Kosuke, Tokyo 108-0075 (JP); SUGAYA Shigeru, Tokyo 108-0075 (JP); HIRATA Ryuichi, Tokyo 108-0075 (JP)
(74) Representative: D Young & Co LLP
(86) International application number: PCT/JP2024/011406
(87) International publication number: WO 2024/203907

(57) **Abstract**

[Object] To reduce communication delay caused upon roaming.

[Solving Means] A communication apparatus according to the present disclosure includes a receiver that receives a connection request from a terminal apparatus; a transmitter that transmits an acquisition request made to acquire terminal information when the connection request is received from the terminal apparatus or according to a position of the terminal apparatus, the terminal information being information regarding the terminal apparatus; and a control section that completes processing of connection established with the terminal apparatus, on the basis of the terminal information acquired in response to the acquisition request.

## Description

### Technical Field

The present disclosure relates to a communication apparatus, a control apparatus, and a communication method.

### Background Art

The rise of cross reality (XR) and factory automation has been increasing a need for wireless communication conforming to these use cases. Especially, a delay in communication and the reliability of the communication are key indicators for such wireless communication. Further, in such use cases, a plurality of access points (APs) is installed in a region to be used. It is assumed that a user who is holding a terminal (an STA), or an autonomous robot (AGV/AMR) that includes an STA is in the region, and the STA performs a roaming operation to change a connection-target from a currently connected AP to another AP when the user or the autonomous robot moves.

When an STA performs a roaming operation, it is necessary for the STA to perform connection processing on an AP to which the STA is to be newly connected. In other words, there is a need to, for example, establish reconnection (re-association) with the AP to which the STA is to be newly connected and additionally exchange an encryption key using 4-way handshake. It generally takes about 10 ms to perform such operations, which may result in causing a communication delay. Further, switching is performed using a break-before-make approach upon establishing reconnection. Thus, a communication channel to the STA may be temporarily blocked, and there may be a reduction in the reliability of communication.

Non-Patent Literature 1 discloses a multi-link-device (MLD)-based multi-AP seamless roaming. The multi-AP seamless roaming is a method for performing roaming without interrupting data transmission to an STA, the method including bringing a plurality of physically distant APs together into a group by an AP MLD entity that is a logical entity, virtually operating a group of APs in the group as a single AP MLD, and performing, by the STA, roaming between the APs. However, when there are a number of APs, the number of APs virtually operable as a single AP MLD is limited, and the case in which an STA is connected to an AP that does not belong to a group serving as an AP MLD is not taken into consideration. Thus, in this case, there may be a delay in communication and a reduction in the reliability of the communication, the delay and reduction being caused due to re-association or 4-way handshake.

### Citation List

### Non-Patent Literature

Non-Patent Literature 1: IEEE 802.11-22/1910r1

### Disclosure of Invention

### Technical Problem

It is an object of the present disclosure to provide a communication apparatus, a control apparatus, and a communication method that reduce a delay in communication.

### Solution to Problem

A communication apparatus according to the present disclosure includes a communication section that receives a connection request from a terminal that is wirelessly connected to base stations of a plurality of base stations by use of different links; and a control section that acquires terminal information from a control entity when the connection request is received or according to a distance to the terminal, the terminal information being information regarding the terminal that is necessary to communicate with the terminal, the control entity controlling the plurality of base stations. The communication section transmits a connection response indicating that the terminal information has been acquired.

### Brief Description of Drawings

[Fig. 1] Fig. 1 illustrates an example of a configuration of a system according to the present embodiment.
[Fig. 2] Fig. 2 is a block diagram of an AP that includes a communication apparatus according to the present embodiment.
[Fig. 3] Fig. 3 is a block diagram of a non-AP MLD that includes a communication apparatus according to the present embodiment.
[Fig. 4] Fig. 4 is a block diagram of an AP MLD entity having a configuration in which the AP MLD entity is implemented by an apparatus different from an AP.
[Fig. 5] Fig. 5 illustrates a logical configuration of an architecture of a system according to the present embodiment.
[Fig. 6] Fig. 6 illustrates an example of a physical configuration of the architecture of the system according to the present embodiment.
[Fig. 7] Fig. 7 is a block diagram of an example of a configuration of an AP that includes a wired communication section.
[Fig. 8] Fig. 8 illustrates another example of the physical configuration of the architecture of the system according to the present embodiment.
[Fig. 9] Fig. 9 illustrates an example of an SAP that connects an MLD upper MAC sublayer and an MLD lower MAC sublayer.
[Fig. 10] Fig. 10 illustrates a first example of a sequence according to the present embodiment.
[Fig. 11] Fig. 11 illustrates a second example of the sequence according to the present embodiment.
[Fig. 12] Fig. 12 illustrates a third example of the sequence according to the present embodiment.
[Fig. 13] Fig. 13 illustrates a fourth example of the sequence according to the present embodiment.
[Fig. 14] Fig. 14 illustrates an example of a frame format of a request signal used to request information regarding the non-AP MLD.
[Fig. 15] Fig. 15 illustrates an example of a frame format of a signal used to report the information regarding the non-AP MLD.
[Fig. 16] Fig. 16 illustrates an example of a frame format that can be applied to both a request for and a report about the information regarding the non-AP MLD.
[Fig. 17] Fig. 17 illustrates an example of a frame format of an association response signal and an example of a table in which a plurality of elements is defined.
[Fig. 18] Fig. 18 illustrates an example of a frame format of a signal used to report information regarding an AP MLD group.
[Fig. 19] Fig. 19 is a block diagram of an example of a configuration of hardware of a computer that performs a series of processes according to the present embodiment using a program.
[Fig. 20] Fig. 20 is a block diagram of an example of a schematic configuration of a smartphone to which the present embodiment is applied.
[Fig. 21] Fig. 21 is a block diagram of an example of a schematic configuration of an in-vehicle apparatus to which the present embodiment is applied.
[Fig. 22] Fig. 22 is a block diagram of an example of a schematic configuration of a wireless AP to which the present embodiment is applied.

### Mode(s) for Carrying Out the Invention

Embodiments of the present disclosure will now be described below with reference to the drawings. Note that, in the specification and the drawings, structural elements that have substantially the same functional configuration are denoted by the same reference numeral to omit a description thereof as appropriate. Illustrations in the figures are simplified ones, and, in addition to illustrated structural elements, a structural element necessary for implementation is provided as appropriate. Further, when terms such as "first" and "second" are used in the specification or in the claims, those do not indicate any orders or any degrees of importance but are used in order to distinguish a certain structural element from another structural element, unless otherwise specified.

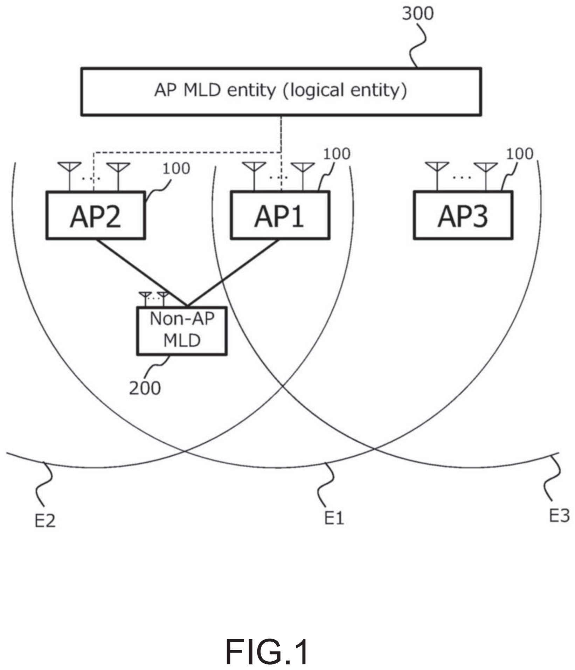

Fig. 1 illustrates an example of a configuration of a system according to the present embodiment. The system illustrated in Fig. 1 includes an AP multi-link-device (MLD) entity 300, an AP 1, an AP 2, an AP 3, and at least one non-AP MLD 200. Any AP is referred to as an AP 100 when the APs 1 to 3 are not particularly to be distinguished.

The AP MLD entity 300 is a logical entity, and is physically implemented by, for example, a central control apparatus, an apparatus or edge apparatus in the cloud, or one of the APs 1 to 3. An apparatus by which the AP MLD entity 300 is implemented is also referred to as a control apparatus. When the AP MLD entity 300 is implemented by an AP, the control apparatus is also an AP.

Each of the APs 1 to 3 is a communication apparatus or wireless communication apparatus that corresponds to a base station. The APs 1 and 2 each have a connection relationship with the AP MLD entity 300, and a single AP MLD is virtually implemented by the AP 1, the AP 2, and the AP MLD entity 300. In this case, the AP MLD entity 300 is a control entity that controls the APs 1 and 2. The APs 1 and 2 belong to a group (an AP MLD group) of APs included in the AP MLD. Arcs centered at the respective APs 1 to 3 respectively represent coverages E1, E2, and E3.

The non-AP MLD 200 is a communication apparatus or wireless communication apparatus that corresponds to a terminal apparatus (or an STA) that supports multi-link operation (MLO). The non-AP MLD 200 is connected to the AP MLD through the APs 1 and 2. A solid line that connects the non-AP MLD 200 and each of the APs 1 and 2 shows that the non-AP MLD 200 is wirelessly connected to the AP MLD. Further, for example, the non-AP MLD 200 is held by a user or included in an apparatus that is, for example, a movable robot or an AGV, and moves with movement of, for example, the user or robot. In the following description, it is assumed that the non-AP MLD 200 may move while communicating with the AP MLD. The figure only illustrates one non-AP MLD 200, but actually there may be at least two non-AP MLDs.

### [Apparatus Configuration]

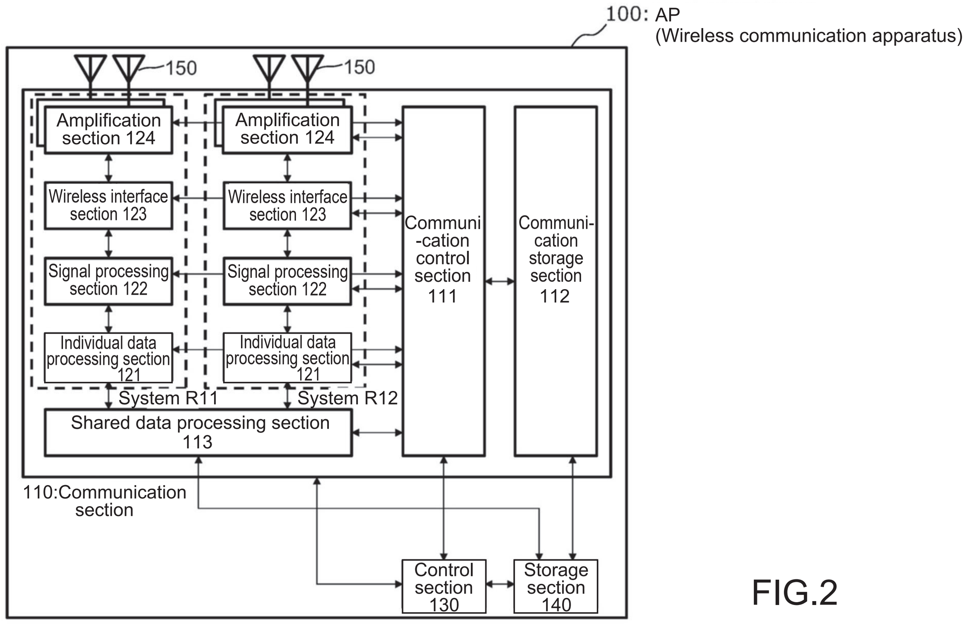

Fig. 2 is a block diagram of the AP 100 (the APs 1 to 3). The AP 100 corresponds to a communication apparatus, wireless communication apparatus, or base station according to the present embodiment, and is hereinafter also referred to as a communication apparatus 100. A wireless communication apparatus 100 primarily includes a communication section 110, a control section 130, a storage section 140, and an antenna 150. The communication section 110 includes a communication control section 111, a communication storage section 112, a shared data processing section 113, a system R11, and a system R12. The communication section 110 may be implemented by at least one LSI.

The systems R11 and R12 each include an individual data processing section 121, a signal processing section 122, a wireless interface section 123, at least one amplification section 124, and at least one antenna 150. In other words, a set of the individual data processing section 121, the signal processing section 122, the wireless interface section 123, the amplification section 124, and the antenna 150 is included in a single system. Each system serves as a transceiver that includes a transmitter that transmits a signal and a receiver that receives a signal.

Each system performs wireless communication using a different link. The link refers to a wireless transmission line that enables data transmission between communication apparatuses, and may be referred to as a wireless link. The respective systems may use links in different frequency bands or in the same frequency band. A storage section may be provided to each system. The links used by the respective systems may be connected to different communication apparatuses or to the same communication apparatus. For example, communication with the non-AP MLD 200 may be performed using one of the links, and communication with the AP MLD entity 300 implemented as a control apparatus different from the AP 100 may be performed using another of the links. Further, a single system may communicate with a plurality of communication apparatuses. For example, a single system may communicate with the non-AP MLD 200 and may communicate with the AP MLD entity 300 implemented as an apparatus different from the AP 100. Further, the two systems may also be configured such that one of the two systems is used (activated), and another of the two systems is not used (inactivated).

The communication control section 111 controls operations performed by the respective structural elements and information transmission performed between the structural elements. Further, the communication control section 111 performs control to deliver, to the shared data processing section 113 and the systems R11 and R12, control information and management information that are to be reported to another communication apparatus. The communication control section 111 serves as an MLD management entity.

The communication storage section 112 retains information used by the communication control section 111. The communication storage section 112 retains data to be transmitted and received data. For example, the communication storage section 112 retains data to be transmitted to the non-AP MLD 200 and data received from the non-AP MLD 200. The communication storage section 112 retains data to be transmitted to the AP MLD entity 300 and data received from the AP MLD entity 300.

At the time of transmission, the shared data processing section 113 performs sequence management of the data retained in the communication storage section 112 as well as the control information and management information that are received from the communication control section 111, and performs, for example, encryption processing. Then, the shared data processing section 113 assigns the processed data to the respective individual data processing sections 121. At the time of reception, the shared data processing section 113 performs decryption processing and reorder processing on the data. The shared data processing section 113 includes functions of an upper MAC (a higher MAC) and an MLD entity. For example, the encryption processing may be performed using an encryption key acquired by a procedure such as 4-way handshake performed between the AP 100 and the non-AP MLD 200.

At the time of transmission, each individual data processing section 121 performs channel access operation on the basis of carrier sensing, generates a data unit by adding a media access control (MAC) header and an error-detection code to data to be transmitted, and performs processing of coupling a plurality of data units. At the time of reception, each individual data processing section 121 performs processing of decoupling a MAC header of the received data unit, performs analysis and error detection, and performs an operation of requesting retransmission. The individual data processing section 121 is also referred to as a lower MAC.

Note that the operations performed by the shared data processing section 113 and each individual data processing section 121 are not limited to the operations described above, and, for example, one of the shared data processing section 113 and the individual data processing section 121 may perform an operation performed by another of the shared data processing section 113 and the individual data processing section 121.

At the time of transmission, each signal processing section 122 performs, for example, encoding, interleaving, and modulation on a data unit, and adds a physical header to generate a symbol stream. At this point, each signal processing section 122 may perform spatial multiplexing processing for multi-input multi-output (MIMO). Note that, instead of performing the spatial multiplexing processing, each signal processing section 122 may apply any amount of delay (hereinafter referred to as a cyclic shift delay (CSD)) for each antenna 150. At the time of reception, each signal processing section 122 analyzes the physical header, and performs, for example, demodulation, deinterleaving, and decoding on the symbol stream to generate the data unit. Further, each signal processing section 122 estimates complex channel characteristics and performs space separation processing as necessary.

At the time of transmission, each wireless interface section 123 performs digital-to-analog signal conversion, filtering, up-conversion, and phase control on a symbol stream, and generates a transmission signal. At the time of reception, the wireless interface section 123 performs down-conversion, filtering, and analog-to-digital signal conversion on a reception signal, and generates the symbol stream.

The amplification section 124 of each system amplifies a signal input through the wireless interface section 123 or the antenna 150. A portion of the amplification section 124 may be a structural element external to the communication section 110. Further, a portion of the amplification section 124 may be included in the wireless interface section 123.

The control section 130 controls the communication section 110 and the communication control section 111. Further, on behalf of the communication control section 111, the control section 130 may perform a portion of operations performed by the communication control section 111. Furthermore, the communication control section 111 and the control section 130 may be formed into a single block.

For example, a control section of a base station according to the present disclosure corresponds to the communication control section 111, or corresponds to at least one of the communication control section 111 or the control section 130.

When the AP MLD entity 300 is implemented by the AP 100, the communication control section 111, a set of the communication control section 111 and the shared data processing section 113, or a set of the communication control section 111, the shared data processing section 113, and the control section 130 may perform a function of the AP MLD entity 300.

The storage section 140 retains information used by the control section 130 and the communication section 110. Further, on behalf of the communication storage section 112, the storage section 140 may perform a portion of operations performed by the communication storage section 112. The storage section 140 and the communication storage section 112 may be formed into a single block.

A plurality of sets of the individual data processing section 121 and the signal processing section 122 may be connected to one wireless interface section 123. In other words, one wireless interface section 123 may be shared by systems of a plurality of systems. Further, a plurality of sets of the wireless interface section 123, the amplification section 124, and the antenna 150 may be connected to one signal processing section 122. In other words, the signal processing section 122 may be shared by systems of a plurality of systems. In this case, one individual data processing section 121 or a plurality of individual data processing sections 121 may be provided.

In the configuration described above, the AP 100 may especially perform the following operation.

For example, when an AP of the communication control section 111 is selected by the non-AP MLD 200 (a terminal apparatus) as a connection-target AP for roaming (handover) and the communication control section 111 receives a connection request from the non-AP MLD 200, the communication control section 111 may acquire, from the AP MLD entity 300, terminal information that is information regarding the non-AP MLD 200. For example, the communication control section 111 may transmit, to the AP MLD entity 300, an acquisition request made to acquire terminal information, and may acquire the terminal information transmitted by the AP MLD entity 300 (a control apparatus) in response to the acquisition request. The terminal information includes, as information necessary to communicate with the non-AP MLD 200, information regarding a capability of the non-AP MLD 200 and information regarding a setting of security (such as encryption) with the non-AP MLD 200. The communication control section 111 performs control such that a connection response indicating that the terminal information has been acquired is transmitted. This connection response is also a report indicating that processing of connection established with the non-AP MLD 200 is completed. This makes it possible to omit a subsequent process (an authentication process) included in the connection processing. In other words, it is basically necessary for the communication control section 111 to acquire, for example, information regarding a security setting (such as encryption) by performing a procedure such as 4-way handshake after connection is established with the non-AP MLD 200. However, this procedure can be omitted since the information has already been acquired from the AP MLD entity 300 (a control apparatus).

Further, the above-described connection request received from the non-AP MLD 200 does not necessarily have to include information regarding a capability of the non-AP MLD 200. The communication control section 111 acquires the information from the AP MLD entity 300 (a control apparatus). Thus, a length of a frame of the connection request can be made shorter by not including, in the connection request, the information regarding the capability of the non-AP MLD 200, which is ordinarily necessary to be included in the connection request. Therefore, it is expected that the time necessary to establish connection (re-association) with a new connection-target AP 100 can be made shorter. Note that the communication control section 111 may include a capability of the AP 100 in a connection response, or does not necessarily have to include the capability when the communication control section 111 takes over a capability of a connection-target AP for the non-AP MLD 200 before roaming. In the latter case, a length of a frame of a connection response can be made shorter.

In addition to the approach of transmitting, in response to receiving a connection request, an acquisition request made to acquire the terminal information described above, the communication control section 111 may adopt an approach of transmitting the acquisition request (before the reception of the connection request) according to a distance to the non-AP MLD 200. For example, the communication control section 111 performs control such that the acquisition request is transmitted when the distance between the non-AP MLD 200 and the AP 100 of the communication control section 111 is less than or equal to a specified value. The specified value may correspond to a distance at which the AP 100 is expected to be able to communicate with the non-AP MLD 200 with a certain degree of quality, or a distance defined using another approach. Examples of an approach of acquiring a position of the non-AP MLD 200 include an approach of measuring an intensity of a signal received from the non-AP MLD 200, and an approach of acquiring position information regarding the position of the non-AP MLD 200 from a server that manages the position of the non-AP MLD 200 or from the non-AP MLD 200 itself. Alternatively, an approach of measuring the position of the non-AP MLD 200 using, for example, a sensor or beams may also be adopted.

The communication control section 111 may perform control such that a signal used to make a request to extend a waiting time for the non-AP MLD 200 to wait for reception of a connection response is transmitted in response to a connection request being received from the non-AP MLD 200. In this case, the communication control section 111 may perform control such that the connection response is transmitted to the non-AP MLD 200 within the extended waiting time. Specifically, the communication control section 111 performs control such that terminal information is acquired and a connection response is transmitted within the extended waiting time for the non-AP MLD 200 to perform waiting. When the connection response is not successfully transmitted within the extended waiting time or when the terminal information is not successfully acquired from the AP MLD entity 300 (a control apparatus) within the extended waiting time, the communication control section 111 may perform control such that ordinary processing of connection established with the non-AP MLD 200 is performed. The ordinary connection processing includes at least one of exchanging information regarding a capability with the non-AP MLD 200 by exchanging an association request frame and an association response frame (association processing) or exchanging information regarding a security setting (such as encryption) by a procedure such as 4-way handshake (authentication processing), or both of them.

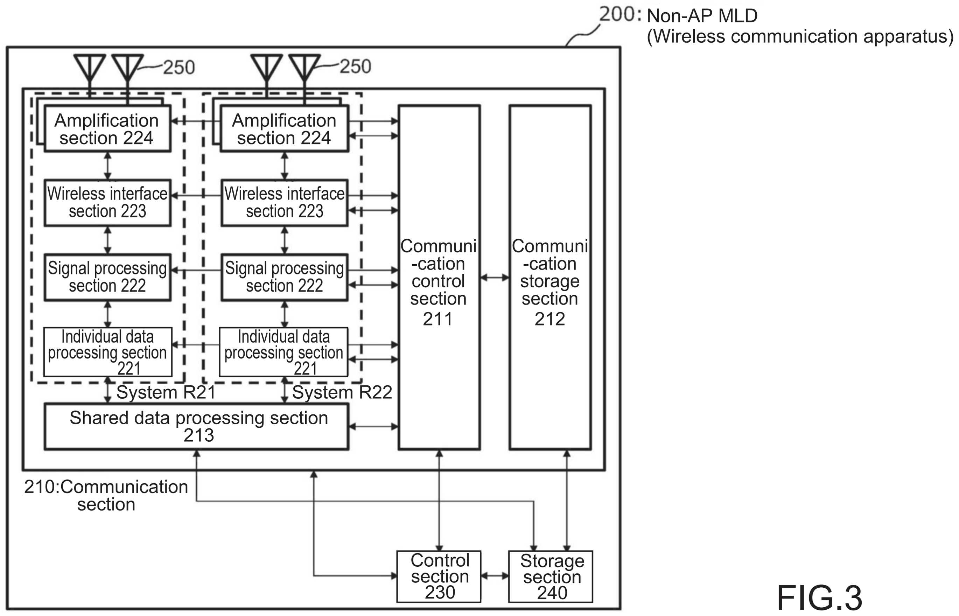

Fig. 3 is a block diagram of the non-AP MLD 200. The non-AP MLD 200 corresponds to a communication apparatus, wireless communication apparatus, terminal apparatus, or STA according to the present embodiment, and is hereinafter also referred to as a communication apparatus 200. The communication apparatus 200 primarily includes a communication section 210, a control section 230, a storage section 240, and an antenna 250. The communication section 210 includes a communication control section 211, a communication storage section 212, a shared data processing section 213, a system R21, and a system R22. The communication section 210 may be implemented by at least one LSI.

The systems R21 and R22 each include an individual data processing section 221, a signal processing section 222, a wireless interface section 223, at least one amplification section 224, and at least one antenna 250. In other words, a set of the individual data processing section 221, the signal processing section 222, the wireless interface section 223, the amplification section 224, and the antenna 250 is included in a single system. Each system serves as a transceiver that includes a transmitter that transmits a signal and a receiver that receives a signal.

Each system performs wireless communication using a different link. The link refers to a wireless transmission line that enables data transmission between two communication apparatuses, and may be referred to as a wireless link. The respective systems may use links in different frequency bands or in the same frequency band. A storage section may be provided to each system. For example, communication with the AP 100_2 is performed using one of the links, and communication with the AP 100_1 is performed using another of the links. Both of the links may be used to perform communication with the AP 100_1.

The communication control section 211 controls operations performed by the respective structural elements and information transmission performed between the structural elements. Further, the communication control section 211 performs control to deliver, to the shared data processing section 213 and the systems R21 and R22, control information and management information that are to be reported to another communication apparatus.

The communication storage section 212 retains information used by the communication control section 211. The communication storage section 212 retains data to be transmitted and received data. For example, the communication storage section 212 retains data to be transmitted to the AP 100 and data received from the AP 100.

At the time of transmission, the shared data processing section 213 performs sequence management of the data retained in the communication storage section 212 as well as the control information and management information that are received from the communication control section 211, and performs, for example, encryption processing. Then, the shared data processing section 213 assigns the processed data to the respective individual data processing sections 221. At the time of reception, the shared data processing section 213 performs decryption processing and reorder processing on the data. For example, the encryption processing may be performed using an encryption key acquired by a procedure such as 4-way handshake performed between the non-AP MLD 200 and the AP 100 or between the non-AP MLD 200 and the AP MLD entity 300 via the AP 100.

At the time of transmission, each individual data processing section 221 performs channel access operation on the basis of carrier sensing, generates a data unit by adding a media access control (MAC) header and an error-detection code to data to be transmitted, and performs processing of coupling a plurality of data units. At the time of reception, each individual data processing section 221 performs processing of decoupling a MAC header of the received data unit, performs analysis and error detection, and performs an operation of requesting retransmission.

Note that the operations performed by the shared data processing section 213 and each individual data processing section 221 are not limited to the operations described above, and, for example, one of the shared data processing section 213 and the individual data processing section 221 may perform an operation performed by another of the shared data processing section 213 and the individual data processing section 221.

At the time of transmission, each signal processing section 222 performs, for example, encoding, interleaving, and modulation on a data unit, and adds a physical header to generate a symbol stream. At this point, each signal processing section 222 may perform spatial multiplexing processing for multi-input multi-output (MIMO). Note that, instead of performing the spatial multiplexing processing, each signal processing section 222 may apply any amount of delay (hereinafter referred to as a cyclic shift delay (CSD)) for each antenna 250. At the time of reception, each signal processing section 222 analyzes the physical header, and performs, for example, demodulation, deinterleaving, and decoding on the symbol stream to generate the data unit. Further, each signal processing section 222 estimates complex channel characteristics and performs space separation processing as necessary.

At the time of transmission, each wireless interface section 223 performs digital-to-analog signal conversion, filtering, up-conversion, and phase control on a symbol stream, and generates a transmission signal. At the time of reception, the wireless interface section 223 performs down-conversion, filtering, and analog-to-digital signal conversion on a reception signal, and generates the symbol stream.

The amplification section 224 of each system amplifies a signal input through the wireless interface section 223 or the antenna 250. A portion of the amplification section 224 may be a structural element external to the communication section 210. Further, a portion of the amplification section 224 may be included in the wireless interface section 223.

The control section 230 controls the communication section 210 and the communication control section 211. Further, on behalf of the communication control section 211, the control section 230 may perform a portion of operations performed by the communication control section 211. Furthermore, the communication control section 211 and the control section 230 may be formed into a single block.

For example, a control section of a terminal according to the present disclosure corresponds to the communication control section 211, or corresponds to at least one of the communication control section 211 or the control section 230.

The storage section 240 retains information used by the control section 230 and the communication section 210. Further, on behalf of the communication storage section 212, the storage section 240 may perform a portion of operations performed by the communication storage section 212. The storage section 240 and the communication storage section 212 may be formed into a single block.

A plurality of sets of the individual data processing section 221 and the signal processing section 222 may be connected to one wireless interface section 223. In other words, one wireless interface section 223 may be shared by systems of a plurality of systems. Further, a plurality of sets of the wireless interface section 223, the amplification section 224, and the antenna 250 may be connected to one signal processing section 222. In other words, the signal processing section 222 may be shared by systems of a plurality of systems. In this case, one individual data processing section 221 or a plurality of individual data processing sections 221 may be provided.

In the configuration described above, the non-AP MLD 200 may especially perform the following operation when the non-AP MLD 200 selects, as a roaming target, an AP that does not belong to an AP MLD group (that is not to be controlled by an AP MLD).

The communication control section 211 performs control such that an AP that does not belong to an AP MLD group is selected as a roaming-target AP (such as the AP 3 illustrated in Fig. 1), that is, a new connection-target AP (a target AP) and a connection request is transmitted to the target AP. The connection request does not necessarily have to include information regarding a capability related to the non-AP MLD 200.

When a connection response received from the target AP includes information indicating that the target AP has acquired terminal information that is information regarding the non-AP MLD 200 that is necessary to communicate with the non-AP MLD 200, the communication control section 211 performs control such that a procedure (such as 4-way handshake) of causing the target AP to acquire the terminal information is omitted, and completes processing of connection established with the target AP. Examples of the terminal information acquired by the target AP include information regarding a capability of the non-AP MLD 200 and information regarding encryption necessary to communicate with the non-AP MLD 200 (such as an encryption key). The AP 100 can separately acquire the terminal information from the AP MLD entity 300 (a control apparatus) if the non-AP MLD 200 does not perform the procedure of causing the AP to acquire the terminal information. Thus, the non-AP MLD 200 can omit 4-way handshake performed between the non-AP MLD 200 and the AP 100 or between the non-AP MLD 200 and the AP MLD 300 via the AP 100. It is basically necessary for the communication control section 211 to cause the target AP or the AP MLD 300 to acquire information regarding encryption (such as an encryption key) as terminal information by performing a procedure (authentication processing) such as 4-way handshake after being connected to the target AP (after association processing), and to also acquire the information regarding encryption (such as an encryption key). However, this procedure can be omitted since the target AP has acquired this information from the AP MLD entity 300 (a control apparatus). Further, the non-AP MLD 200 can continue to use originally used information regarding encryption. This makes it possible to reduce execution of unnecessary processing, to complete roaming quickly, and thus to reduce a delay in communication.

When a response made to make a request to extend a waiting time for the non-AP MLD 200 to wait for reception of a connection response, is received in response to the connection request described above, the communication control section 211 may extend the waiting time and may wait for the connection response until an elapse of the waiting time. This makes it possible to prevent time-out from occurring before reception of a connection response when the time until reception of the connection response is longer than the ordinary waiting time (a set time).

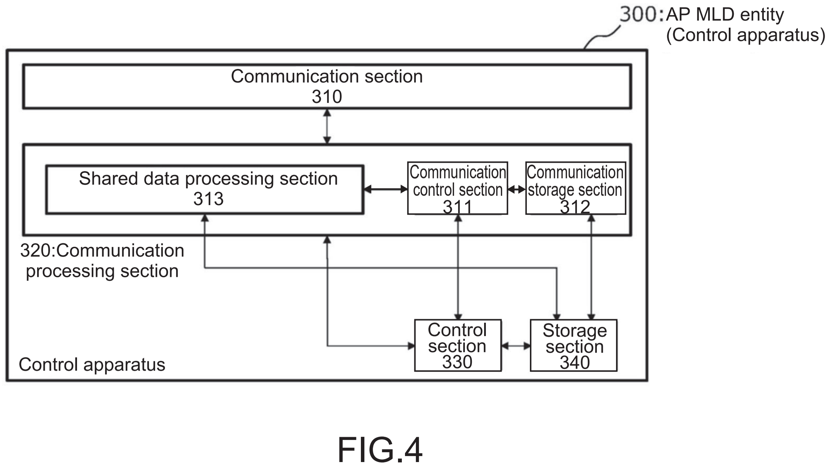

Fig. 4 is a block diagram of a control apparatus different from the AP 100 when the AP MLD entity 300 is implemented by the control apparatus. The control apparatus is referred to as a control apparatus 300 by being denoted by the same reference numeral as the AP MLD entity 300. The control apparatus 300 includes a communication processing section 320, a control section 330, a storage section 340, and a communication section 310. The communication processing section 320 includes a communication control section 311, a communication storage section 312, and a shared data processing section 313.

The control section 330 controls and manages subordinate APs (the APs 100_1 to 100_3 illustrated in Fig. 1) through a network layer and an application layer. For example, the control section 330 collects information regarding the non-AP MLD 200 connected to the subordinate AP (information regarding Layer 3 and layers higher than Layer 3), performance information regarding a performance of the non-AP MLD 200 such as throughput upon data transmission and a delay in the data transmission, and load information regarding the subordinate AP; and optimizes network information regarding the non-AP MLD 200 and the AP to which the non-AP MLD 200 is connected. Roaming processing may also be performed through the control section 330.

The communication control section 311 controls and manages APs (the APs 1 and 2 illustrated in Fig. 1) in a group (an AP MLD group) of APs included in an AP MLD through a MAC layer. For example, the communication control section 311 collects information regarding the non-AP MLD 200 connected to a certain subordinate AP (information regarding Layer 2), and communicates the pieces of information to another AP if needed so that the APs in the same MLD group can cooperate with each other in a MAC layer. The communication control section 311 may manage terminal information (such as an encryption key) that is information regarding the non-AP MLD 200 connected to an AP, and information regarding a sequence number. The encryption key may be shared by the APs 1 and 2 in the group. The present embodiment is not limited to this configuration, and the communication control section 311 may also manage, for example, whether the non-AP MLD 200 can transmit a packet successfully.

On behalf of the communication control section 311, the control section 330 may perform a portion of operations performed by the communication control section 311. Further, the communication control section 311 and the control section 330 may be formed into a single block.

For example, a control section of a control apparatus according to the present disclosure corresponds to the communication control section 311, or corresponds to at least one of the communication control section 311 or the control section 330.

The communication storage section 312 retains information used by the communication control section 311. The communication storage section 312 retains data to be transmitted and received data. For example, the communication storage section 312 retains data to be transmitted to the AP 100 and data received from the AP 100. The communication storage section 312 may retain information (terminal information) regarding a non-AP MLD for which processing of connection established with an AP in an AP MLD group is completed. In this case, the communication storage section 312 may correspond to a retention section that retains the terminal information.

At the time of transmission, the shared data processing section 313 performs sequence management of the data retained in the communication storage section 312 as well as the control information and management information that are received from the communication control section 311, and performs, for example, encryption processing. Then, the shared data processing section 313 transmits the processed data to the communication section 310. At the time of reception, the shared data processing section 313 performs decryption processing and reorder processing on the data. The shared data processing section 313 may manage, for each AP MLD group, an encryption key used by an AP and an encryption key used by a non-AP MLD subordinate to the AP. The encryption key may be acquired by, for example, performing authentication processing including 4-way handshake, the authentication processing being performed between the control apparatus 300 and a non-AP MLD via an AP in the group.

The shared data processing section 313, or both the shared data processing section 313 and the communication control section 311 include a function of an MLD upper MAC.

The communication section 310 includes a transmitter that transmits a signal and a receiver that receives a signal, and wirelessly communicates with each connection-target AP 100. Note that the communication performed between the control apparatus 300 and the AP 100 may be wireless communication (such as wireless communication in conformity with IEEE 802.11 standards) or wired communication (such as Ethernet communication). Alternatively, both the wired communication and the wireless communication can be performed. Note that the communication section 310 may be capable of directly communicating with the non-AP MLD 200 (without the AP 100). The communication section 310 includes an antenna when wireless communication is performed.

The storage section 340 retains information used by the control section 330 and the communication processing section 320. Further, on behalf of the communication storage section 312, the storage section 340 may perform a portion of operations performed by the communication storage section 312. The storage section 340 and the communication storage section 312 may be formed into a single block.

In the configuration described above, when an AP (a target AP) that does not belong to an AP MLD group performs processing of connection established with the non-AP MLD 200, the control apparatus 300 may perform the following operation together with the target AP.

A control section (including at least one of the communication control section 311 or the control section 330) according to the present embodiment performs control such that terminal information that is information regarding the non-AP MLD 200 is read from the communication storage section 312 or the storage section 340 to be provided or transmitted to a target AP when an acquisition request made to acquire the terminal information is received from the target AP. In this case, the control section may add the target AP to an AP MLD group, that is, the control section may add the target AP as an AP to be controlled by the control section. The control section described above may add the target AP to an AP MLD group (an AP to be controlled) only when the acquisition request includes an addition request made to add the target AP to the AP MLD group.

The control section according to the present embodiment may perform control such that report information is transmitted to a target AP in advance, where the report information indicates that information regarding a non-AP MLD subordinate to a group of APs belonging to an AP MLD group can be provided by making a request to the control apparatus 300 for the information regarding the subordinate non-AP MLD. This enables the target AP to perform determination to make a request to the control apparatus 300 for information regarding the non-AP MLD 200 when, for example, a connection request is received from the non-AP MLD 200. The report information described above may include identification information regarding a non-AP MLD subordinate to a group of APs belonging to an AP MLD group. For example, the identification information may be a MAC address or an association ID (AID).

The control section according to the present embodiment may perform control such that group information is transmitted to a target AP and another AP that belongs to an AP MLD group (an AP to be controlled) when the target AP has been added to the AP MLD group, where the group information indicates the addition.

Further, the control section according to the present embodiment may exclude, from an AP MLD group, an AP that is included in APs belonging to the AP MLD group and that has not communicated with the non-AP MLD 200 for a specified period of time.

Furthermore, when there is an upper limit for the number of APs allowed to belong to an AP MLD group and when the number of APs exceeds the upper limit by a target AP being added, the control section according to the present embodiment may select an AP other than the target AP and exclude the selected AP from the AP MLD group. An AP disconnected upon roaming may be selected as an AP to be excluded, or the AP to be excluded may be selected by other criteria. When the control section described above excludes an AP from an AP MLD group, the control section may update information regarding a security setting (such as encryption) necessary to communicate with the non-AP MLD 200. For example, the control section described above may perform authentication processing together with the non-AP MLD 200 via an AP in an AP MLD group to generate new encryption keys to be respectively used by the non-AP MLD 200 and the AP in the AP MLD group.

### [Architecture]

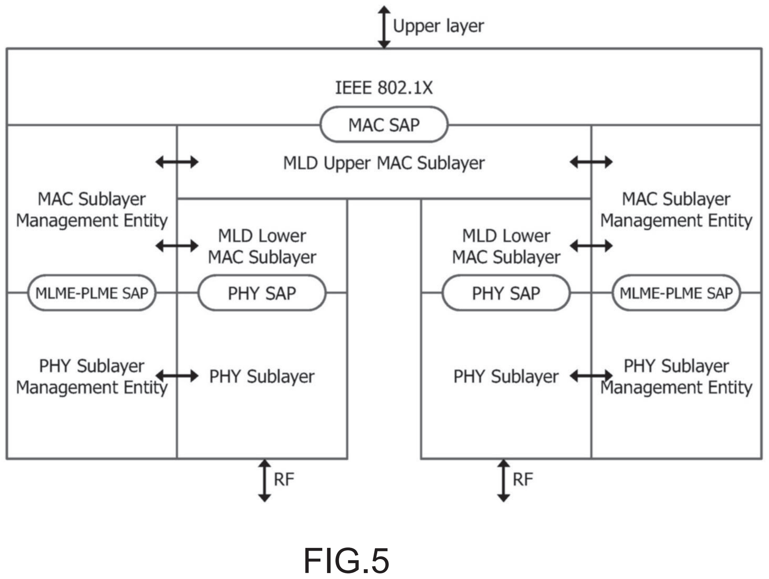

Fig. 5 illustrates a logical configuration of an architecture of a system according to the present embodiment.

A PHY sublayer is a block that corresponds to a physical layer, and corresponds to a signal processing section in the apparatus configuration (refer to Fig. 2). A PHY sublayer management entity is a block that controls the PHY sublayer, and corresponds to the communication control section and the control section in the apparatus configuration (refer to Fig. 2 or 4).

An MLD lower MAC sublayer is a block that corresponds to a portion of a MAC layer, and corresponds to the individual data processing section in the apparatus configuration (refer to Fig. 2).

An MLD upper MAC sublayer is a block that corresponds to a portion of the MAC layer. The MLD upper MAC sublayer corresponds to the shared data processing section in the apparatus configuration (refer to Fig. 2 or 4) and corresponds to the AP MLD entity.

A MAC sublayer management entity is a block that controls the MLD lower MAC sublayer and the MLD upper MAC sublayer, and corresponds to the communication control section and the control section in the apparatus configuration (refer to Fig. 2 or 4).

IEEE 802.1X is a block that corresponds to a data link layer related to authentication. For example, IEEE 802.1X corresponds to the shared data processing section or the control section in the apparatus configuration (refer to Fig. 2 or 4), or both of them. Respective service access points (SAPs) of an AP MLD entity are interfaces used to connect the blocks, and are used to exchange specified commands using a specified method. Further, information is exchanged and controlled between the blocks using any method, which is indicated by arrows.

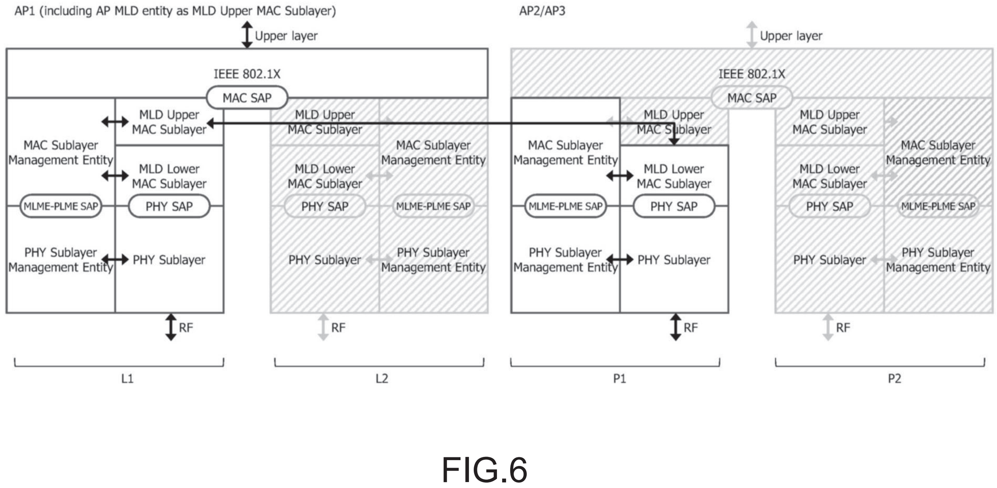

Fig. 6 illustrates an example of a physical configuration of the architecture of the system according to the present embodiment.

First, this configuration includes at least two APs. Each AP has a physical configuration that corresponds to the logical configuration illustrated in Fig. 5. In the example illustrated in the figure, it is assumed that an AP MLD group includes two APs, where there are an AP 1 on the left and an AP 2 or an AP 3 on the right. One of the AP 2 and the AP 3 is referred to as an AP 2/AP 3. The AP 1 includes an AP MLD entity as an MLD upper MAC sublayer.

The AP 1 communicates with the non-AP MLD 200 using a PHY sublayer, an MLD lower MAC sublayer, an MLD upper MAC sublayer, and corresponding management entities on one side L1, and using IEEE 802.1X. Blocks on another side L2, that is, a PHY sublayer, an MLD lower MAC sublayer, an MLD upper MAC sublayer, and corresponding management entities on the other side L2 may be used to communicate with another terminal or may be unused in particular (turned off).

The AP 2/AP 3 uses a PHY sublayer, an MLD lower MAC sublayer, and corresponding management entities on one side P1. An MLD upper MAC sublayer and IEEE 802.1X on the one side P1 as well as hatched blocks (a PHY sublayer, an MLD lower MAC sublayer, an MLD upper MAC sublayer, and corresponding management entities) on another side P2 may be used to communicate with another terminal or may be unused in particular (turned off).

The description of respective blocks illustrated in Fig. 6 is similar to the description of the logical configuration. However, the MLD upper MAC sublayer on the one side L1 of the AP 1 and the MLD lower MAC sublayer on the one side P1 of the AP 2/AP 3 are connected to each other, and information is exchanged and controlled using any method. This communication is performed using wireless communication or wired communication. When the communication is performed using wireless communication, these blocks may communicate with each other via, for example, other blocks. In other words, the communication between the MLD upper MAC sublayer on the one side L1 of the AP 1 and the MLD lower MAC sublayer on the right may be performed via the MLD lower MAC sublayer, a PHY SAP, the PHY sublayer, and an RF on the one side L1 of the AP 1, via a medium (a wireless medium), and via an RF, the PHY sublayer, and a PHY SAP on the one side P1 of the AP 2/AP 3. Further, when the communication is performed using wired communication, the communication may be performed using, for example, Ethernet. In this case, it is sufficient if a wired communication section 160 is provided to the AP 100 and the control section 130 communicates with another AP through the wired communication section.

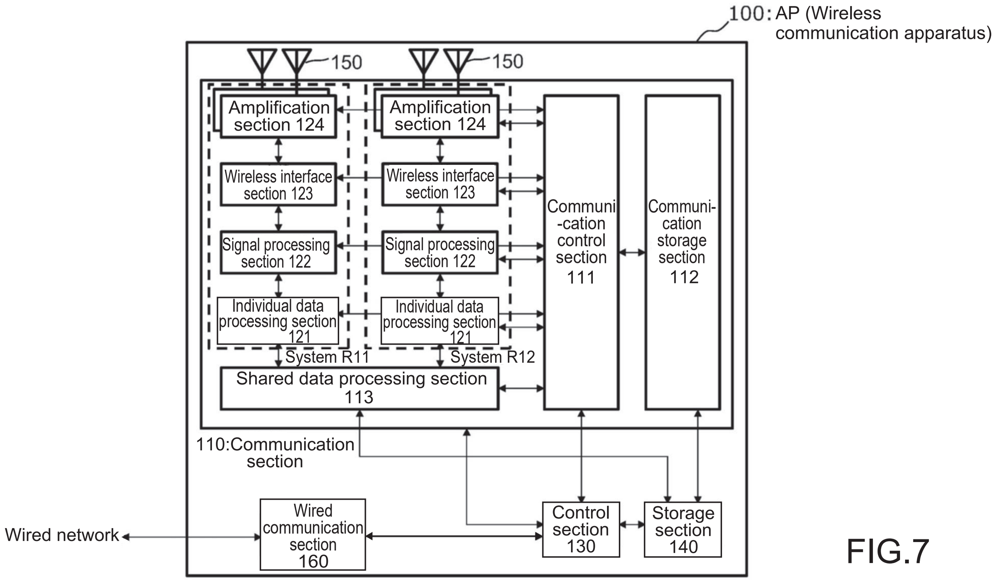

Fig. 7 is a block diagram of an example of a configuration of the AP 100 including the wired communication section 160. The wired communication section 160 is connected to the control section 130. The wired communication section 160 is connected to a wired network such as Ethernet, and communicates with another AP through the wired network. The wired communication section 160 includes a transmitter that transmits a signal and a receiver that receives a signal.

Note that, in the configuration described above, a frequency used by the AP 1 to communicate with the non-AP MLD 200 and a frequency used by the AP 2/AP 3 to communicate with the non-AP MLD 200 may be different. A frequency used by the AP 2 to communicate with the non-AP MLD 200 and a frequency used by the AP 3 to communicate with the non-AP MLD 200 may be different.

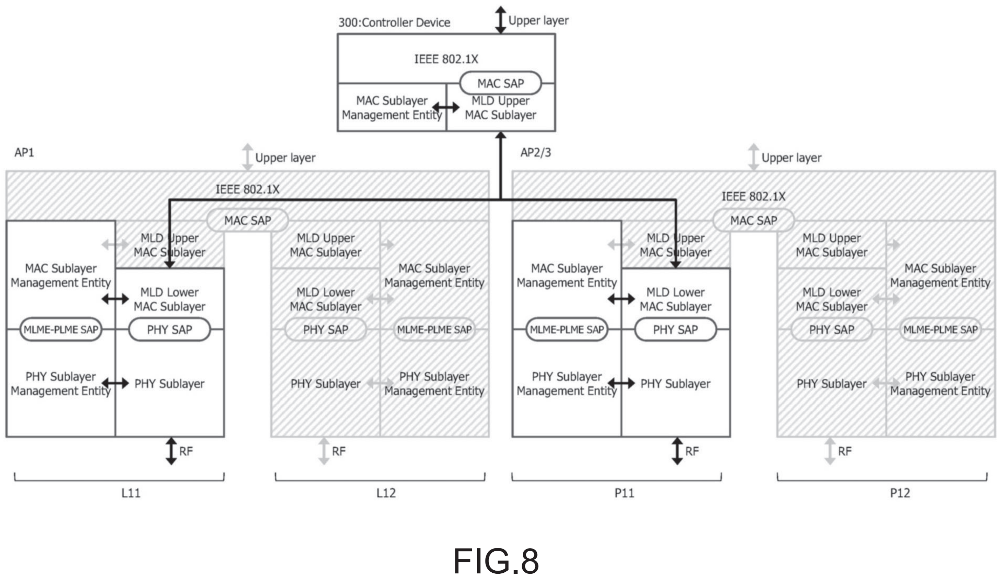

Fig. 8 illustrates another example of the physical configuration of the architecture of the system according to the present embodiment.

This configuration includes at least two APs and the control apparatus 300. The control apparatus 300 is, for example, a central control apparatus, or an apparatus or edge apparatus in the cloud. The AP 1 and the AP 2/AP 3 each have a physical configuration that corresponds to the logical configuration illustrated in Fig. 5.

The AP 1 uses a PHY sublayer, an MLD lower MAC sublayer, and corresponding management entities on one side L11. An MLD upper MAC sublayer and IEEE 802.1X on the one side L11 as well as blocks (a PHY sublayer, an MLD lower MAC sublayer, an MLD upper MAC sublayer, and corresponding management entities) on another side L12 may be used to communicate with another terminal or may be unused in particular (turned off).

The control apparatus 300 includes an MLD upper MAC sublayer, a corresponding management entity, and IEEE 802.1X. The description of the respective blocks is similar to the description of the logical configuration. However, the MLD upper MAC sublayer of the control apparatus 300 and the MLD lower MAC sublayer on one side P11 of the AP 2/AP 3 are connected to each other, and information is exchanged and controlled using any method. The description of the AP 2/AP 3 is similar to that in Fig. 6. In other words, the AP 2/AP 3 uses a PHY sublayer, an MLD lower MAC sublayer, and corresponding management entities on the one side P11. An MLD upper MAC sublayer and IEEE 802.1X on the one side P11 as well as blocks (a PHY sublayer, an MLD lower MAC sublayer, an MLD upper MAC sublayer, and corresponding management entities) on another side P12 may be used to communicate with another terminal or may be unused in particular (turned off).

Note that, in the configuration described above, a frequency used by the AP 1 to communicate with the non-AP MLD 200 and a frequency used by the AP 2/AP 3 to communicate with the non-AP MLD 200 may be different. A frequency used by the AP 2 to communicate with the non-AP MLD 200 and a frequency used by the AP 3 to communicate with the non-AP MLD 200 may be different.

An SAP that connects an MLD upper MAC sublayer and an MLD lower MAC sublayer may be provided.

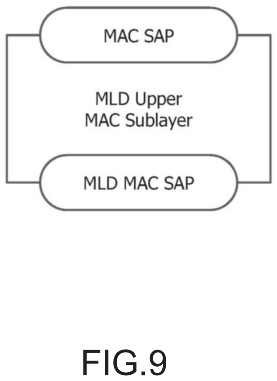

Fig. 9 illustrates an example of providing an MLD MAC SAP that is an example of an SAP that connects an MLD upper MAC sublayer and an MLD lower MAC sublayer. In this case, specified commands are exchanged between the MLD upper MAC sublayer and the MLD lower MAC sublayer through the MLD MAC SAP using a specified method.

For example, the following signals are exchanged as commands used to perform scanning.

```
 MLME-SCAN.request(
         BSSType,
         BSSID,
         )
```

MLME represents a MAC sublayer management entity. BSSType (the type of basic service set (BSS) such as an infrastructure BSS and a mesh BSS) and BSSID (a MAC address of an AP) each include information regarding BSS on which scanning is performed. Note that MLME is not limited to this name, and may be given a name related to a management entity that controls an MLD upper MAC sublayer and an MLD lower MAC sublayer.

### [First Example of Sequence]

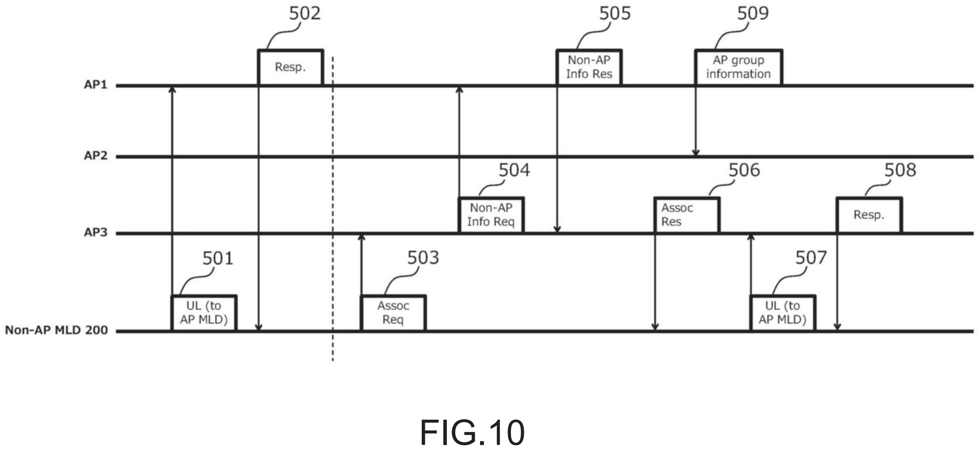

Fig. 10 illustrates a first example of a sequence according to the present embodiment. In this sequence, when the AP 3 receives a connection request from the non-AP MLD 200 having determined that roaming is to be performed, the AP 3 performs wireless communication to make a request to the AP 1 including an AP MLD entity for information regarding the non-AP MLD 200 (terminal information), and receives the information regarding the non-AP MLD 200 from the AP 1. At this point, the AP 3 completes processing of connection established with the non-AP MLD 200, on the basis of the received information, and transmits, to the non-AP MLD 200, a connection response indicating that the information regarding the non-AP MLD 200 has been acquired (that is, a connection response indicating the completion of the connection processing). The sequence is described below in detail.

Before the sequence is started, a capability check may be performed between APs or between a non-AP MLD and an AP, where the capability check is performed to check that a function according to the present embodiment is supported. Further, the AP 1 transmits a signal (AP group information) to the AP 3 in advance, where the signal includes information indicating that the AP 1 includes an AP MLD entity and forms an AP MLD, and information regarding the AP MLD. The AP group information includes, for example, information regarding an AP included in an AP MLD group and information regarding a non-AP MLD subordinate to the AP. The AP group information is also report information indicating that information regarding a non-AP MLD subordinate to an AP belonging to an AP MLD group can be provided by inquiring of the AP 1. Note that, before the sequence is started, the AP MLD entity adds the APs 1 and 2, but does not add the AP 3 thereto.

First, the non-AP MLD 200 communicates with the AP 1 including an AP MLD entity. In the example illustrated in the figure, the non-AP MLD 200 transmits a UL signal 501 to the AP 1, and receives a response signal 502 from the AP 1. Thereafter, the non-AP MLD 200 determines, at a timing indicated using a dashed line, that the AP 3 is to be roamed from the AP 1 (for example, the non-AP MLD 200 determines that a beacon signal of the AP 3 exhibits a higher degree of RSSI than a beacon signal from the AP 1), and the non-AP MLD 200 transmits a connection request signal (an association request) 503 to the AP 3.

When the AP 3 receives the connection request signal from the non-AP MLD 200, the AP 3 transmits, to the AP 1 including the AP MLD entity, a request signal (a non-AP information request) 504 used to request information regarding the non-AP MLD 200. The request signal used to request the information regarding the non-AP MLD 200 may include a request that the AP 3 be added to the AP MLD group.

When the AP 1 receives, from the AP 3, the request signal used to request the information regarding the non-AP MLD 200, the AP 1 transmits a report signal (a non-AP information response) 505 used to report the information regarding the non-AP MLD 200. Note that the information regarding the non-AP MLD 200 may include information regarding a capability of the non-AP MLD 200 and information regarding a setting of security (such as encryption) between the AP MLD and the non-AP MLD 200.

When the AP 3 receives, from the AP 1, the report signal used to report the information regarding the non-AP MLD 200, the AP 3 completes processing of connection established with the non-AP MLD 200, on the basis of the information included in the report signal. The AP 3 transmits a connection response signal (an association response) 506 indicating that the information regarding the non-AP MLD 200 has been acquired, that is, indicating that the connection processing is completed.

When the non-AP MLD 200 receives the connection response signal from the AP 3, the non-AP MLD 200 understands that the AP 3 has acquired the information regarding the non-AP MLD 200 (terminal information), which is necessary to communicate with the non-AP MLD 200, that is, the non-AP MLD 200 understands that the connection processing performed by the AP 3 is completed, and the non-AP MLD 200 omits subsequent processing (such as authentication processing including 4-way handshake). Thereafter, the non-AP MLD 200 and the AP 3 start communicating with each other. In the example illustrated in the figure, the non-AP MLD 200 transmits a UL signal 507 to the AP 3, and receives a response signal 508 from the AP 3.

Note that, in the communication described above, a frequency at which the non-AP MLD 200 communicates with the AP 1 may be different from a frequency at which the non-AP MLD 200 communicates with the AP 3.

In the communication described above, the AP 1 may add the AP 3 to the AP MLD group (an AP to be controlled) in response to the request signal (the non-AP information request) 504 received from the AP 3.

Further, the AP 1 may determine that an AP that has not communicated with the non-AP MLD 200 for a certain period of time is to be excluded from the AP MLD group, and may exclude the AP from the group.

When there is a change in an AP MLD group due to addition or exclusion, the AP 1 may transmit a signal (AP group information) used to report the change. For example, when the AP 3 has been added to the AP MLD group, the AP 1 may transmit, to the AP 2, a signal (AP group information) 509 indicating that the AP 3 has been added. The signal 509 may also be transmitted to the AP 3.

Further, when, for example, the AP 1 determines that an AP has not communicated with the non-AP MLD 200 for a certain period of time and excludes the AP from the group, the AP 1 may transmit a signal (AP group information) indicating the exclusion of the AP to other APs (a currently added AP may be included) in the group. When, for example, the AP 1 is excluded, the AP 1 may transmit, to the AP 2 or both the AP 2 and the AP 3, a signal indicating that the AP 1 has been excluded. Note that addition of an AP and exclusion of the AP may be reported using the same signal or different signals.

### [Second Example of Sequence]

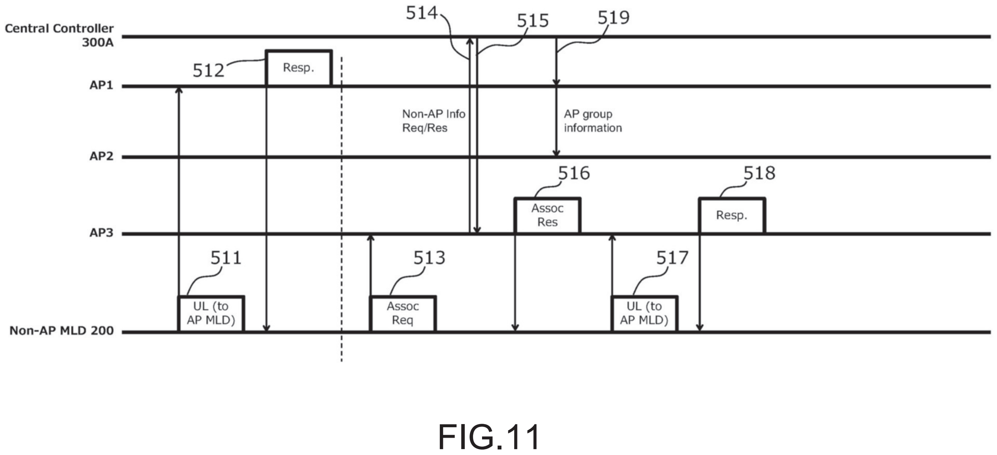

Fig. 11 illustrates a second example of the sequence according to the present embodiment. In this sequence, when the AP 3 receives a connection request from the non-AP MLD 200, the AP 3 performs wired communication to make a request to a central control apparatus 300A including an AP MLD entity for information regarding the non-AP MLD 200 (terminal information), and receives the information regarding the non-AP MLD 200 from the central control apparatus 300A. On the basis of the received information, the AP 3 completes connection established with the non-AP MLD 200 and transmits, to the non-AP MLD 200, a connection response indicating that the information regarding the non-AP MLD 200 has been acquired (the connection is completed). The sequence is described below in detail.

Operations performed before of the sequence is started are similar to the operations performed for the sequence illustrated in Fig. 10.

First, for example, the non-AP MLD 200 is communicating with the AP 1. In the example illustrated in the figure, the non-AP MLD 200 transmits a UL signal 511 to the AP 1, and receives a response signal 512 from the AP 1.

Thereafter, the non-AP MLD 200 determines, at a timing indicated using a dashed line, that the non-AP MLD 200 is to be connected to the AP 3 using roaming (for example, the non-AP MLD 200 determines that a beacon signal of the AP 3 exhibits a higher degree of RSSI than a beacon signal from the AP 1), and transmits a connection request signal (an association request) 513 to the AP 3.

When the AP 3 receives the connection request signal from the non-AP MLD 200, the AP 3 transmits, to the central control apparatus 300A including the AP MLD entity, a request signal 514 used to request information regarding the non-AP MLD 200. The request signal used to request the information regarding the non-AP MLD 200 may include a request that the AP 3 be added to an AP MLD group. When the central control apparatus 300A receives, from the AP 3, the request for the information regarding the non-AP MLD 200, the central control apparatus 300A transmits a report signal 515 that includes the information regarding the non-AP MLD 200. Note that the information regarding the non-AP MLD 200 may be information regarding a capability of the non-AP MLD 200 and information regarding a setting of security (such as encryption) between the AP MLD and the non-AP MLD 200. Note that the request for the information regarding the non-AP MLD 200 and the response to the request are transmitted and received using wired communication.

When the AP 3 receives, from the central control apparatus 300A, the report signal 515 used to report the information regarding the non-AP MLD 200, the AP 3 completes processing of connection established with the non-AP MLD 200, and transmits a connection response signal (an association response) 516 indicating that the information regarding the non-AP MLD 200 has been acquired, that is, indicating that the connection processing is completed.

When the non-AP MLD 200 receives the connection response signal 516 from the AP 3, the non-AP MLD 200 understands that the AP 3 has acquired the information regarding the non-AP MLD 200 (the non-AP MLD 200 understands that the AP 3 has completed the connection processing), and omits subsequent processing.

Thereafter, the non-AP MLD 200 and the AP 3 start communicating with each other. In the example illustrated in the figure, the non-AP MLD 200 transmits a UL signal 517 to the AP 3, and receives a response signal 518 from the AP 3.

Note that, in the communication described above, a frequency at which the non-AP MLD 200 communicates with the AP 1 may be different from a frequency at which the non-AP MLD 200 communicates with the AP 3.

Further, when an AP has been added to the AP MLD group or an AP has been excluded from the AP MLD group, a signal (AP group information) 519 used to report the addition or exclusion is transmitted. When, for example, the AP 1 has been excluded, the signal 519 reporting the exclusion may be transmitted to the APs 1 and 2. When the AP 3 has been added, the signal 519 reporting the addition of the AP 3 may be transmitted to the APs 1 and 2. The signal 519 may be transmitted to the AP 3.

### [Third Example of Sequence]

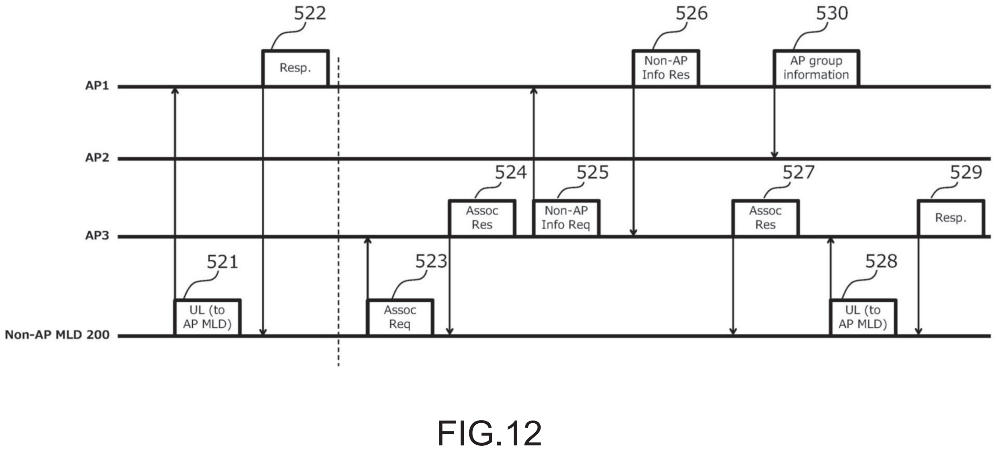

Fig. 12 illustrates a third example of the sequence according to the present embodiment. In this sequence, when the AP 3 receives a connection request from the non-AP MLD 200, the AP 3 returns a connection response 524 to the non-AP MLD 200 once to cause the non-AP MLD 200 to wait temporarily. Thereafter, the AP 3 performs wireless communication to make a request to the AP 1 including an AP MLD entity for information regarding the non-AP MLD 200 (terminal information). When the AP 3 receives the information regarding the non-AP MLD 200 from the AP 1, the AP 3 completes connection processing, and transmits, to the waiting AP 3, the connection response 524 indicating that the information regarding the non-AP MLD 200 has been acquired (the AP 3 has completed connection processing). The sequence is described below in detail.

Operations performed before of the sequence is started are similar to the operations performed for the sequence illustrated in Fig. 10.

First, for example, the non-AP MLD 200 is communicating with the AP 1. In the example illustrated in the figure, the non-AP MLD 200 transmits a UL signal 521 to the AP 1, and receives a response signal 522 from the AP 1.

Thereafter, the non-AP MLD 200 determines, at a timing indicated using a dashed line, that the non-AP MLD 200 is to be connected to the AP 3 using roaming (for example, the non-AP MLD 200 determines that a beacon signal of the AP 3 exhibits a higher degree of RSSI than a beacon signal from the AP 1), and transmits a connection request signal (an association request) 523 to the AP 3.

When the AP 3 receives the connection request signal 523 from the non-AP MLD 200, the AP 3 transmits a connection response signal (an association response) 524 including a request for temporary waiting performed in order to acquire information regarding the non-AP MLD 200.

When the non-AP MLD 200 receives the connection response signal 524 from the AP 3, the non-AP MLD 200 waits temporarily, and extends a term of validity up to completion of connection as necessary. The extension of the term of validity makes it possible to retard occurrence of time-out.

Subsequent operations are similar to the operations performed for the sequence illustrated in Fig. 10. In other words, the AP 3 transmits, to the AP 1 including the AP MLD entity, a request signal (a non-AP information request) 525 used to request information regarding the non-AP MLD 200. The AP 1 transmits, to the AP 3, a report signal (a non-AP information response) 526 used to report the information regarding the non-AP MLD 200. The AP 3 completes processing of connection established with the non-AP MLD 200, on the basis of the information included in the report signal, and transmits a connection response signal (an association response) 527 indicating that the information regarding the non-AP MLD 200 has been acquired (the connection processing is completed). When the non-AP MLD 200 receives the connection response signal 527 from the AP 3, the non-AP MLD 200 understands that the AP 3 has acquired the information regarding the non-AP MLD 200 (the AP 3 has completed the connection processing), and omits subsequent processing. Thereafter, the non-AP MLD 200 and the AP 3 start communicating with each other. In the example illustrated in the figure, the non-AP MLD 200 transmits a UL signal 528 to the AP 3, and receives a response signal 529 from the AP 3.

Further, when an AP has been added to the AP MLD group or an AP has been excluded from the AP MLD group, a signal (AP group information) 530 used to report the addition or exclusion is transmitted. This operation is performed, as in the case of the sequence illustrated in Fig. 10. The signal 530 may be transmitted to the AP 3.

### [Fourth Example of Sequence]

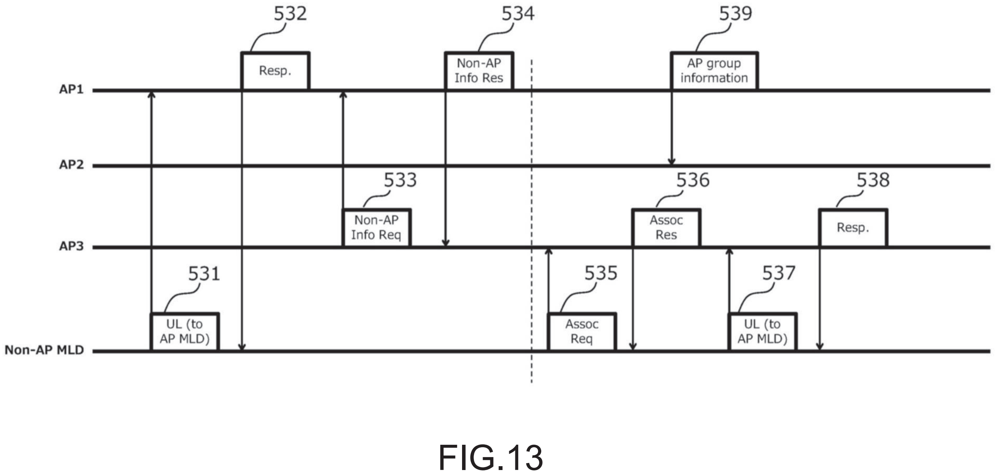

Fig. 13 illustrates a fourth example of the sequence according to the present embodiment. In this sequence, when the AP 3 detects that the non-AP MLD 200 gets close to the AP 3 such that the non-AP MLD 200 is situated at a specified distance from the AP 3, the AP 3 performs wireless communication to make a request to the AP 1 including an AP MLD entity for information regarding the non-AP MLD 200 (terminal information), and receives the information regarding the non-AP MLD 200 from the AP 1. Thereafter, when the AP 3 receives a connection request from the non-AP MLD 200, the AP 3 completes connection processing on the basis of information acquired in advance, and transmits, to the non-AP MLD 200, a connection response signal indicating that the terminal information has been acquired (the connection processing is completed). The sequence is described below in detail.

Operations performed before of the sequence is started are similar to the operations performed for the sequence illustrated in Fig. 10.

First, for example, the non-AP MLD 200 is communicating with the AP 1 including the AP MLD entity. In the example illustrated in the figure, the non-AP MLD 200 transmits a UL signal 531 to the AP 1, and receives a response signal 532 from the AP 1. The AP 3 detects that the non-AP MLD 200 gets close to the AP 3 such that the non-AP MLD 200 is situated at a specified distance from the AP 3.

For example, the AP 3 detects that a distance to the non-AP MLD 200 is less than or equal to a specified value due to a signal received from the non-AP MLD 200 exhibiting a degree of RSSI greater than a specified value. Alternatively, the AP 3 acquires position information regarding a position of the non-AP MLD 200 from a position management server or the non-AP MLD 200, and detects, on the basis of the position information, that the distance to the non-AP MLD 200 is less than or equal to the specified value. Alternatively, the AP 3 measures the position of the non-AP MLD 200 using, for example, a sensor or beams, and detects, on the basis of the measured position, that the distance to the non-AP MLD 200 is less than or equal to the specified value.

When the AP 3 detects that the AP 3 gets close to the non-AP MLD 200, the AP 3 transmits, to the AP 1 including the AP MLD entity, a request signal (a non-AP information request) 533 used to request information regarding the non-AP MLD 200. The request signal used to request the information regarding the non-AP MLD 200 may include a request that the AP 3 be added to the AP MLD.

When the AP 1 receives, from the AP 3, the request signal 533 used to request the information regarding the non-AP MLD 200, the AP 1 transmits a report signal (a non-AP information response) 534 used to report the information regarding the non-AP MLD 200. Note that the information regarding the non-AP MLD 200 may include information regarding a capability of the non-AP MLD 200 and information regarding a setting of security (such as encryption) between the AP MLD and the non-AP MLD 200.

When the AP 3 receives, from the AP 1, the report signal 534 used to report the information regarding the non-AP MLD 200, the AP 3 completes, in advance (before a connection request is received from the non-AP MLD 200), processing of connection established with the non-AP MLD 200.

Thereafter, the non-AP MLD 200 determines, at a timing indicated using a dashed line, that the non-AP MLD 200 is to be connected to the AP 3 using roaming, and transmits a connection request signal (an association request) 535 to the AP 3.

When the AP 3 receives the connection request signal 535 from the non-AP MLD 200, the AP 3 transmits a connection response signal (an association response) 536 indicating that the information regarding the non-AP MLD 200 has been acquired (the connection processing is completed).

When the non-AP MLD 200 receives the connection response signal 536 from the AP 3, the non-AP MLD 200 understands that the AP 3 has acquired the information regarding the non-AP MLD 200 (the AP 3 has completed the connection processing), and omits subsequent processing.

Thereafter, the non-AP MLD 200 and the AP 3 start communicating with each other. In the example illustrated in the figure, the non-AP MLD 200 transmits a UL signal 537 to the AP 3, and receives a response signal 538 from the AP 3.

Note that, in the communication described above, a frequency at which the non-AP MLD 200 communicates with the AP 1 and a frequency at which the non-AP MLD 200 communicates with the AP 3 may be different from each other.

Further, when an AP has been added to the AP MLD group or an AP has been excluded from the AP MLD group, a signal (AP group information) 539 used to report the addition or exclusion is transmitted. The signal 539 may also be transmitted to the AP 3.

### [Frame Format]

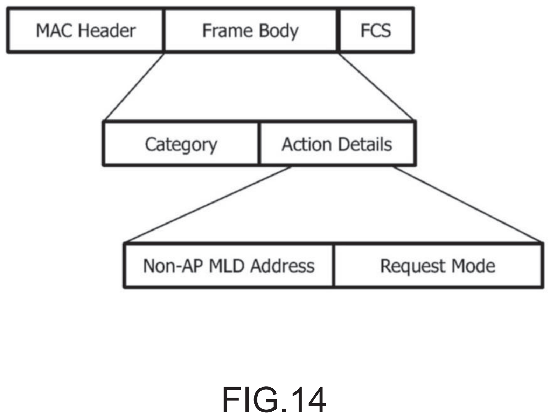

Fig. 14 illustrates an example of a frame format of a request signal (the signal 504 illustrated in Fig. 10, the signal 514 illustrated in Fig. 11, the signal 525 illustrated in Fig. 12, and the signal 533 illustrated in Fig. 13) used to request information regarding the non-AP MLD 200. The format illustrated in Fig. 14 includes MAC Header, Frame Body, and Frame Check Sequence (FCS). Frame Body includes Category and Action Details. Action Details includes Non-AP MLD Address and Request Mode.

MAC Header includes information such as a destination of and a transmission source of the frame, Frame Body is a signal body, and Frame Check Sequence (FCS) includes information regarding error detection. Category includes information regarding the type of the frame (an action frame), and Action Details is a body of the action frame.

Non-AP MLD Address includes a MAC address of a non-AP MLD for which information is to be requested. Request Mode includes a request bit used to request information regarding a non-AP and a request bit used for addition to an AP MLD group. For example, the request bit used to request information regarding a non-AP is "1" when the information regarding a non-AP MLD is requested, and the request bit used to request information regarding a non-AP is "0" when the information is not requested. The request bit used for addition to an AP MLD group is "1" when the addition to an AP MLD group is requested, and the request bit used for addition to an AP MLD group is "0" when the addition is not requested.

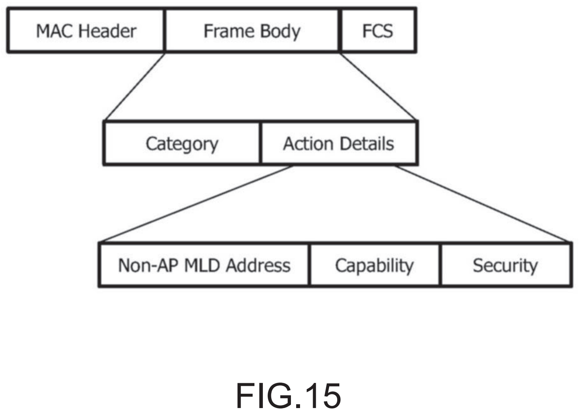

Fig. 15 illustrates an example of a frame format of a signal (the signal 505 illustrated in Fig. 10, the signal 515 illustrated in Fig. 11, the signal 526 illustrated in Fig. 12, and the signal 534 illustrated in Fig. 13) used to report information regarding a non-AP MLD (terminal information). The description is made focused on a portion different from that of the frame format illustrated in Fig. 14, and the description of the same portion as the frame format illustrated in Fig. 14 is omitted.

Action Details includes Non-AP MLD Address, Capability, and Security. Non-AP MLD Address includes a MAC address of a non-AP MLD for which information is to be reported. Capability includes information regarding a capability of a non-AP MLD. Security includes information regarding a setting of security with a non-AP MLD.

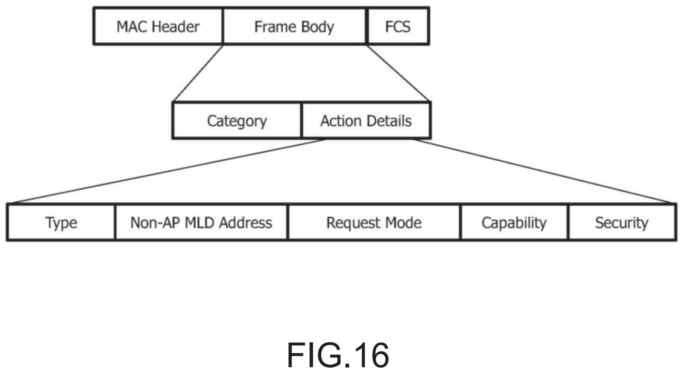

Fig. 16 illustrates an example of a frame format that can be applied to both a request for and a report about information regarding a non-AP MLD. The description is made focused on a portion different from that of the frame format illustrated in Fig. 14 or 15, and the description of the same portion as the frame format illustrated in Fig. 14 or 15 is omitted.

Action Details include Type, Non-AP MLD Address, Request Mode, Capability, and Security. Type includes a value used to determine whether a signal is a request signal used to request information regarding a non-AP MLD or a report signal used to report the information regarding a non-AP MLD. Other fields are similar to those described in Fig. 14 or 15.

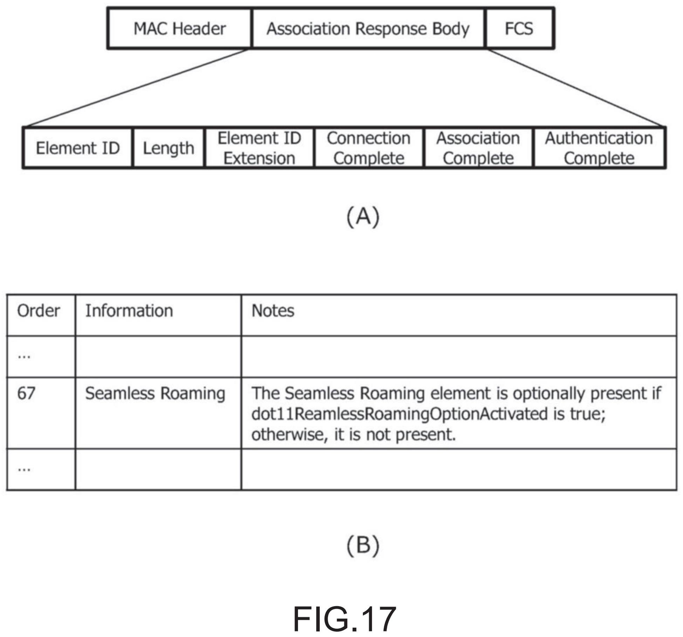

(A) of Fig. 17 illustrates an example of a frame format of an association response signal (the signal 506 illustrated in Fig. 10, the signal 516 illustrated in Fig. 11, the signal 527 illustrated in Fig. 12, and the signal 536 illustrated in Fig. 13). The description of the same field as Fig. 14 is omitted as appropriate. The format illustrated in Fig. 17 includes MAC Header, Association Response Body, and FCS. Association Response Body is a signal body, and includes at least one element.

The element illustrated in the figure includes Element ID, Element ID Extension, Length, Connection Complete, Association Complete, and Authentication Complete.

Element ID and Element ID Extension include information regarding the type of element.

(B) of Fig. 17 illustrates an example of a table in which a plurality of elements that can be stored in Association Response Body is defined. In the case of this element, for example, an element of Order 67 may be defined as one of the elements given in the table. In this case, "67" may be stored in Element ID or Element ID Extension.

Length includes information regarding a length of the element. Connection Complete includes a report indicating that the information regarding a non-AP MLD has been received and that processing of connection established with the non-AP MLD is completed. Association Complete includes a report indicating that information regarding association (such as a capability) that is included in information regarding a non-AP MLD has been acquired, and is optional. Authentication Complete includes a report indicating that information regarding authentication (information regarding a security setting (such as encryption)) that is included in information regarding a non-AP MLD has been acquired, and is optional.

As described above, the information regarding a non-AP MLD, which is a target for Connection Complete, includes the information regarding association and the information regarding authentication. When one of the pieces of information has been acquired, the acquisition may be reported using Association Complete or Authentication Complete. When both of the pieces of information have been acquired, connection is determined to be completed and the acquisition is reported using Connection Complete. It is not necessary to use Association Complete or Authentication Complete, which are optional.

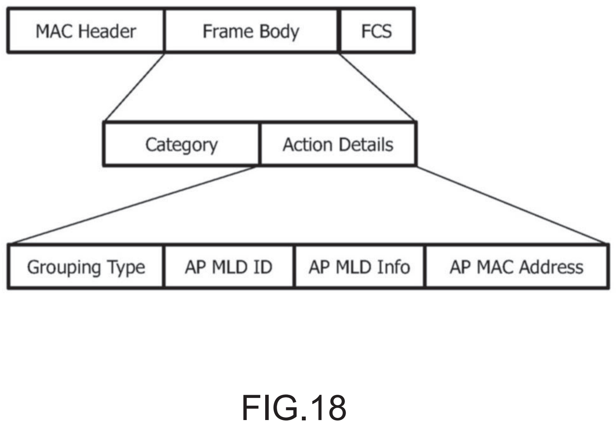

Fig. 18 illustrates an example of a frame format of a signal (the signal 509 illustrated in Fig. 10, the signal 519 illustrated in Fig. 11, the signal 530 illustrated in Fig. 12, and the signal 539 illustrated in Fig. 13) used to report information regarding an AP MLD group (AP group information). The description of the same field as Fig. 14 is omitted as appropriate. Action Details includes Grouping Type, AP MLD ID, AP MLD Info, and AP MAC Address.

Grouping Type includes a value used to determine whether a report is a report about information regarding an AP MLD group, a report about addition to the AP MLD group, or a report about exclusion from the AP MLD group. The information regarding an AP MLD group is information regarding an AP that belongs to the AP MLD group.

AP MLD ID includes an identifier of an AP MLD. In other words, a plurality of AP MLD groups can be formed in parallel, and AP MLD ID is an identifier (an identifier of an AP MLD group) used to determine by which of the plurality of AP MLD groups the AP MLD is formed. Combinations of APs belonging to the respective AP MLD groups may be different from each other, and one AP may belong to a plurality of AP MLD groups. Note that AP MLD ID is different from a MAC address of an AP MLD.

AP MLD Info includes an identifier of an AP MLD (a MAC address of the AP MLD), a MAC address of a non-AP MLD (an STA) connected to the AP MLD, the number of the STAs, and a capability of the AP MLD.

AP MAC Address includes a MAC address of an AP added to or excluded from an AP MLD group.

### [Effects]

As described above, the present embodiment makes it possible to reduce processing necessary when a non-AP MLD (an STA) connected to an AP that belongs to an AP MLD group is newly connected to an AP that does not belong to the AP MLD group. For example, 4-way handshake performed after connection is established can be omitted. This makes it possible to reduce a delay in communication. Further, there is no need to include information regarding a connection-target AP (capability) in a connection response signal transmitted by the connection-target AP. This makes it possible to reduce information volume of the connection response signal.

Roaming is completed quickly by reducing processing performed upon roaming, as described above. This makes it possible to reduce or eliminate a period of time for which a link (a communication channel) is disconnected. Further, during temporary disconnection for a short period of time, connection is established with another AP (the AP 2 illustrated in Fig. 1) using another link. This makes it possible to prevent a reliability of communication from being reduced.

Further, the present embodiment makes it possible to dynamically add an AP to an AP MLD group, exclude the AP from the AP MLD group, or change the AP with respect to the AP MLD group upon roaming by performing fewer processes, where the AP MLD group is a group of APs that virtually operate as a single AP MLD.

### <Example of Configuration of Computer>

The series of processes described above can be performed using hardware or software. When the series of processes is performed using software, a program included in the software is installed from a program recording medium on, for example, a computer incorporated into dedicated hardware or a general-purpose personal computer.

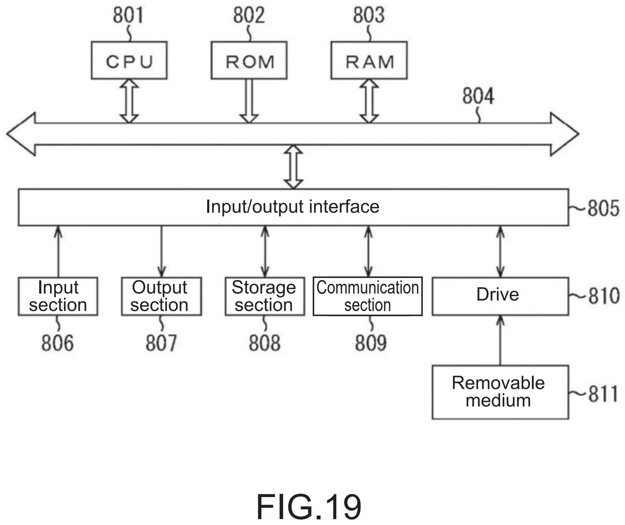

Fig. 19 is a block diagram of an example of a configuration of hardware of a computer that performs the series of processes described above using a program.

A central processing unit (CPU) 801, a read only memory (ROM) 802, and a random access memory (RAM) 803 are connected to each other through a bus 804.

Further, an input/output interface 805 is connected to the bus 804. An input section 806 that includes, for example, a keyboard and a mouse, and an output section 807 that includes, for example, a display and a speaker are connected to the input/output interface 805. Further, a storage section 808 that includes, for example, a hard disk and a nonvolatile memory, a communication section 809 that includes, for example, a network interface, and a drive 810 that drives a removable medium 811 are connected to the input/output interface 805.

In a computer having the configuration described above, the series of processes described above is performed by the CPU 801 loading, for example, a program stored in the storage section 808 into the RAM 803 and executing the program via the input/output interface 805 and the bus 804.

For example, the program executed by the CPU 801 is provided by being recorded in the removable medium 811 or provided via a wired or wireless transmission medium such as a local area network, the Internet, or digital broadcasting, and the provided program is installed on the storage section 808.

Note that the program executed by the computer may be a program in which processes are chronologically performed in the order of the description herein, or may be a program in which processes are performed in parallel or a process is performed at a necessary timing such as a timing of calling.

### <Application Examples>

The present technology can be applied to various products. For example, the base station (a communication apparatus) 100 illustrated in Fig. 2 and the terminal apparatus (a communication apparatus) 200 illustrated in Fig. 3 may each be implemented as a mobile terminal such as a smartphone, a tablet personal computer (PC), a laptop, a portable game terminal, or a digital camera; a fixed terminal such as a television receiver, a printer, a digital scanner, or a network storage; or an in-vehicle terminal such as a car navigation apparatus. Furthermore, the base station (a communication apparatus) 100 and the terminal apparatus (a communication apparatus) 200 may each be implemented as a machine-to-machine communication (M2M) terminal such as a smart meter, a vending machine, a remote monitoring apparatus, or a point-of-sale (POS) terminal. Moreover, each of the base station (a communication apparatus) 100 and the terminal apparatus (a communication apparatus) 200 may be a wireless communication module (such as an integrated circuit module formed using one die) included in a corresponding one of these terminals.

On the other hand, for example, the base station (a communication apparatus) 100 and the terminal apparatus (a communication apparatus) 200 may each be implemented as a wireless LAN AP (a wireless base station) that includes or does not include a router function. Further, the base station (a communication apparatus) 100 and the terminal apparatus (a communication apparatus) 200 may each be implemented as a mobile wireless LAN router. Furthermore, each of the base station (a communication apparatus) 100 and the terminal apparatus (a communication apparatus) 200 may be a wireless communication module (such as an integrated circuit module formed using one die) included in a corresponding one of these apparatuses.

### <Example of Configuration of Smartphone>

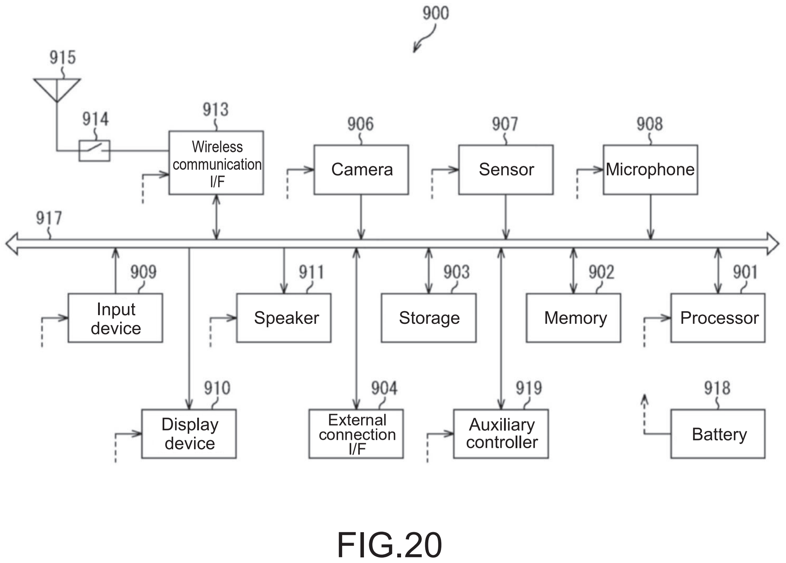

Fig. 20 is a block diagram of an example of a schematic configuration of a smartphone to which the present technology is applied.

A smartphone 900 includes a processor 901, a memory 902, a storage 903, an external connection interface 904, a camera 906, a sensor 907, a microphone 908, an input device 909, and a display device 910. Furthermore, the smartphone 900 includes a speaker 911, a wireless communication interface 913, an antenna switch 914, an antenna 915, a bus 917, a battery 918, and an auxiliary controller 919.

The processor 901 may be, for example, a CPU or a system on chip (SoC), and restricts functions of an application layer and other layers of the smartphone 900.

The memory 902 includes a RAM and a ROM, and stores therein a program that is executed by the processor 901, and data.

The storage 903 includes a storage medium such as a semiconductor memory or a hard disk.

The external connection interface 904 is an interface used to connect an external device such as a memory card or a Universal Serial Bus (USB) device to the smartphone 900.

The camera 906 includes, for example, a charge-coupled device (CCD) or complementary metal- oxide semiconductor (CMOS) imaging element, and generates a captured image.

The sensor 907 includes a sensor group such as a positioning sensor, a gyroscope, a geomagnetic sensor, and an acceleration sensor.

The microphone 908 converts, into an audio signal, sound input to the smartphone 900.

The input device 909 includes, for example, a touch sensor that detects touch on a screen of the display device 910, a keypad, a keyboard, a button, or a switch, and receives an operation performed by a user or information input by the user.

The display device 910 includes a screen such as a liquid crystal display (LCD) or an organic light-emitting diode (OLED) display, and converts, into sound, the audio signal output by the smartphone 900.

The wireless communication interface 913 supports at least one of wireless LAN standards such as IEEE 802.11a, 11b, 11g, 11ac, 11ad, 11ax, 11ay, and 11be, and performs wireless communication.

The wireless communication interface 913 communicates with other apparatuses through a wireless LAN AP in an infrastructure mode. Further, the wireless communication interface 913 directly communicates with other apparatuses in an ad hoc mode or a direct communication mode such as Wi-Fi Direct.

Note that, in Wi-Fi Direct, one of two terminals operates as an AP but communication is directly performed between the terminals, which is different from the ad hoc mode.

Typically, the wireless communication interface 913 includes, for example, a baseband processor, a radio frequency (RF) circuit, and a power amplifier. The wireless communication interface 913 may be a one-chip module in which a memory that stores therein a communication control program, a processor that executes the program, and related circuits are integrated.

In addition to the wireless LAN scheme, the wireless communication interface 913 may support other types of wireless communication schemes such as a near field communication scheme, a proximity wireless communication scheme, and a cellular communication scheme.

The antenna switch 914 switches a connection destination of the antenna 915 between circuits of a plurality of circuits (such as circuits for different wireless communication schemes) included in the wireless communication interface 913.

The antenna 915 includes at least one antenna element (such as a plurality of the antenna elements included in a multiple-input multiple-output (MIMO) antenna), and is used for transmission and reception of a radio signal through the wireless communication interface 913.

Note that the smartphone 900 is not limited to the example illustrated in Fig. 20, and may include a plurality of antennas (such as an antenna for wireless LAN and an antenna of a proximity wireless communication scheme). In this case, the antenna switch 914 may be omitted from the configuration of the smartphone 900.

The processor 901, the memory 902, the storage 903, the external connection interface 904, the camera 906, the sensor 907, the microphone 908, the input device 909, the display device 910, the speaker 911, the wireless communication interface 913, and the auxiliary controller 919 are connected to each other through the bus 917.

The battery 918 supplies power to each block of the smartphone 900 illustrated in Fig. 20 through a power supply line partially indicated using a broken line in the figure. The auxiliary controller 919 operates a minimum necessary function of the smartphone 900 in, for example, a sleep mode.

In the smartphone 900 illustrated in Fig. 20, for example, the communication section 110, communication control section 111, and control section 130 illustrated in Fig. 2, as well as the communication section 210, communication control section 211, and control section 230 illustrated in Fig. 3 may be implemented by the wireless communication interface 913. Further, at least a portion of these functions may be implemented by the processor 901 or the auxiliary controller 919.

Note that the smartphone 900 may operate as a wireless AP (a software AP) when the processor 901 executes an AP function at an application level. Further, the wireless communication interface 913 may include the wireless AP function.

Furthermore, the smartphone 900 may include a biometric authentication section (fingerprint authentication, palm-shape authentication, voice authentication, blood vessel authentication, face authentication, iris authentication, and retina authentication). In this case, the wireless communication interface 913 by which the communication section 110, communication control section 111, and control section 130 illustrated in Fig. 2, as well as the communication section 210, communication control section 211, and control section 230 illustrated in Fig. 3 are implemented is configured to receive power supply from the same battery 918 as at least one of the display device 910, the speaker 911, or the biometric authentication section.

Moreover, in the smartphone 900, information is displayed using at least one of the display device 910 or the speaker 911 on the basis of communication performed with an external apparatus using the wireless communication interface 913. In this case, information related to the present technology may be output as the information from at least one of the display device 910 or the speaker 911.

### <Example of Configuration of In-vehicle Apparatus>

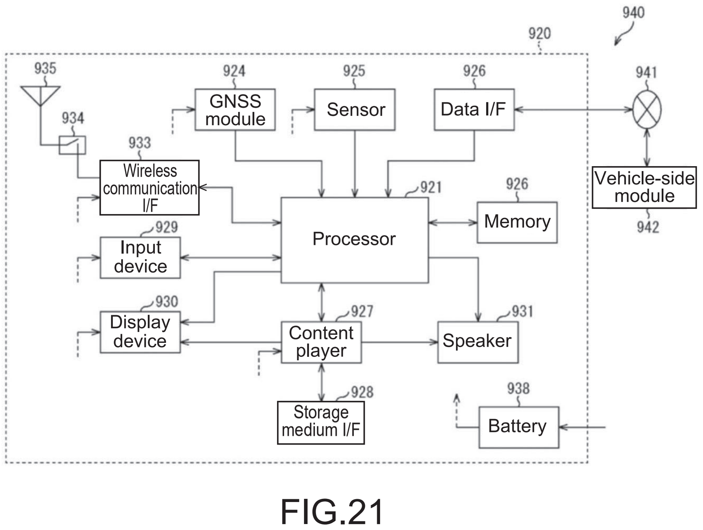

Fig. 21 is a block diagram of an example of a schematic configuration of an in-vehicle apparatus 920 to which the present technology is applied.

The in-vehicle apparatus 920 includes a processor 921, a memory 922, a global navigation satellite system (GNSS) module 924, a sensor 925, a data interface 926, a content player 927, and a storage medium interface 928. Further, the in-vehicle apparatus 920 includes an input device 929, a display device 930, a speaker 931, a wireless communication interface 933, an antenna switch 934, an antenna 935, and a battery 938.

The processor 921 may be, for example, a CPU or an SoC, and controls a navigation function and other functions of the in-vehicle apparatus 920. Further, the processor 921 can also control a drive system of a vehicle, such as a brake, an accelerator, or a steering, on the basis of information obtained through communication based on the present technology.

The memory 922 includes a RAM and a ROM, and stores therein a program that is executed by the processor 921, and data.

The GNSS module 924 measures a location (for example, latitude, longitude, and altitude) of the in-vehicle apparatus 920 using a GNSS signal received from a GNSS satellite.

The sensor 925 includes a sensor group such as a gyroscope, a geomagnetic sensor, and an atmospheric-pressure sensor.

The data interface 926 is connected to an in-vehicle network 941 through, for example, a terminal (not illustrated), and acquires data, such as in-vehicle data, that is generated on the vehicle side.

The content player 927 plays back content stored in a storage medium (such as a CD or a DVD) inserted into the storage medium interface 928.

The input device 929 includes, for example, a touch sensor that detects touch on a screen of the display device 930, a button, or a switch, and receives an operation performed by the user or information input by the user.

The display device 930 includes a screen such as an LCD or an OLED display, and displays thereon an image for the navigation function or for content to be played back.

The speaker 931 outputs sound for the navigation function or for the content to be played back.

Note that, in the in-vehicle apparatus 920, the navigation function and the function of the content player 927 are optional. The navigation function and the content player 927 may be excluded from the configuration of the in-vehicle apparatus 920.

The wireless communication interface 933 supports at least one of the wireless LAN standards such as IEEE 802.11a, 11b, 11g, 11n, 11ac, 11ad, 11ax, 11ay, and 11be, and performs wireless communication. The wireless communication interface 933 communicates with other apparatuses through a wireless LAN AP in the infrastructure mode. Further, the wireless communication interface 933 directly communicates with other apparatuses in the ad hoc mode or the direct communication mode such as Wi-Fi Direct.

Typically, the wireless communication interface 933 includes, for example, a baseband processor, an RF circuit, and a power amplifier. The wireless communication interface 933 may be a one-chip module in which a memory that stores therein a communication control program, and a processor that executes the program or related circuits are integrated. In addition to the wireless LAN scheme, the wireless communication interface 933 may support other types of wireless communication schemes such as a near field communication scheme, a proximity wireless communication scheme, and a cellular communication scheme.

The antenna switch 934 switches a connection destination of the antenna 935 between circuits of a plurality of circuits included in the wireless communication interface 933.

The antenna 935 includes at least one antenna element, and is used for transmission and reception of a radio signal through the wireless communication interface 933.

Note that the in-vehicle apparatus 920 is not limited to the example in Fig. 21, and may include a plurality of the antennas 935. In this case, the antenna switch 934 may be omitted from the configuration of the in-vehicle apparatus 920.

The battery 938 through a power supply line partially indicated using a broken line in the figure, in the in-vehicle apparatus 920 illustrated in Fig. 21, for example, the communication section 110, communication control section 111, and control section 130 illustrated in Fig. 2, as well as the communication section 210, communication control section 211, and control section 230 illustrated in Fig. 3 may be implemented by the wireless communication interface 933. Further, at least a portion of these functions may be implemented by the processor 921.

Further, the wireless communication interface 933 may operate as each of the base station (a communication apparatus) 100 and terminal apparatus (a communication apparatus) 200 described above and provide wireless connection to a terminal of the user in the vehicle.

Furthermore, the present technology may be implemented as an in-vehicle system (or vehicle) 940 that includes at least one block of the in-vehicle apparatus 920 described above, the in-vehicle network 941, and a vehicle-side module 942. The vehicle-side module 942 generates vehicle-side data such as a vehicle speed, a rotation speed of an engine, or failure information, and outputs the generated data to the in-vehicle network 941.

### <Example of Configuration of Wireless AP>

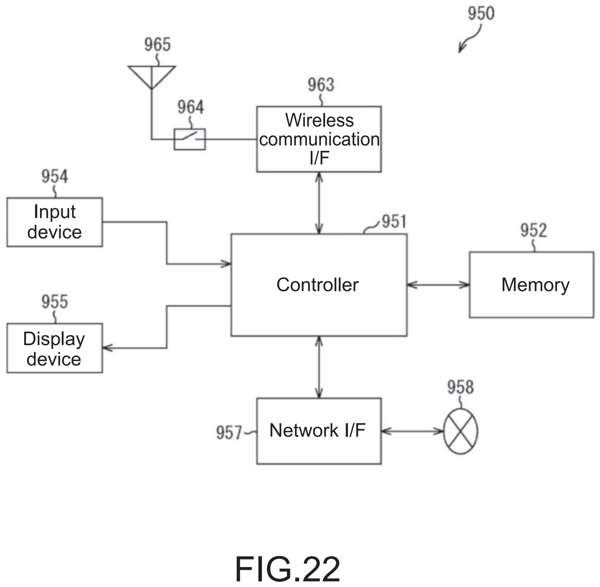

Fig. 22 is a block diagram of an example of a schematic configuration of a wireless AP 950 to which the present technology is applied.

The wireless AP 950 includes a controller 951, a memory 952, an input device 954, a display device 955, a network interface 957, a wireless communication interface 963, an antenna switch 964, and an antenna 965.

The controller 951 may be, for example, a CPU or a digital signal processor (DSP), and operates various functions (such as access restriction, routing, encryption, firewall, and log management) of the Internet protocol (IP) layer and higher layers of the wireless AP 950.

The memory 952 includes a RAM and a ROM, and stores therein a program that is executed by the controller 951, and various control information (such as a terminal list, a routing table, an encryption key, a security setting, and a log).

The input device 954 includes, for example, a button and a switch, and receives an operation performed by a user.

The display device 955 includes, for example, an LED lamp, and displays thereon an operation status of the wireless AP 950.

The network interface 957 is a wired communication interface used to connect the wireless AP 950 to a wired communication network 958. The network interface 957 may include a plurality of connection terminals. The wired communication network 958 may be a LAN such as Ethernet (registered trademark), or may be a wide area network (WAN).

The wireless communication interface 963 supports at least one of the wireless LAN standards such as IEEE 802.11a, 11b, 11g, 11n, 11ac, 11ad, 11ax, 11ay, and 11be, and provides wireless connection as an AP for a nearby terminal.

Typically, the wireless communication interface 963 includes, for example, a baseband processor, an RF circuit, and a power amplifier.

The wireless communication interface 963 may be a one-chip module in which a memory that stores therein a communication control program, and a processor that executes the program or related circuits are integrated.

The antenna switch 964 switches a connection destination of the antenna 965 between circuits of a plurality of circuits included in the wireless communication interface 963, and the antenna 965 includes at least one antenna element, and is used for transmission and reception of a radio signal through the wireless communication interface 963.

In the wireless AP 950 illustrated in Fig. 22, for example, the communication section 110, communication control section 111, and control section 130 illustrated in Fig. 2, as well as the communication section 210, communication control section 211, and control section 230 illustrated in Fig. 3 may also be implemented by the wireless communication interface 963. Further, at least a portion of these functions may be implemented by the controller 951.

Note that the embodiments described above are examples for implementing the present technology, and there is a correspondence relationship between the matter in the embodiments and the claimed invention-specifying matter. Likewise, there is a correspondence relationship between the claimed invention-specifying matter and the matter in the embodiments of the present technology when those are denoted by the same name. However, the present technology is not limited to the embodiments, and can be implemented by various modifications being made to the embodiments without departing from the scope of the present technology.

Further, the processing procedures described in the embodiments described above may be considered a method including a series of the procedures, or may be considered a program used to cause this computer to execute the series of the procedures, or a recording medium that stores therein the program.

For example, a compact disc (CD), a MiniDisc (MD), a digital versatile disc (DVD), a memory card, or a Blu-ray (registered trademark) Disc can be used as this recording medium.

Note that the system as used herein refers to a collection of a plurality of components (such as apparatuses and modules (parts)) and it does not matter whether all of the components are in a single housing. Thus, a plurality of apparatuses accommodated in separate housings and connected to one another via a network, and a single apparatus in which a plurality of modules is accommodated in a single housing are both systems.

Further, the effects described herein are not limitative but are merely illustrative, and other effects may be provided.

The embodiments of the present technology are not limited to the examples described above, and various modifications may be made thereto without departing from the scope of the present technology.

For example, the present technology may have a configuration of cloud computing in which a single function is shared to be cooperatively processed by a plurality of apparatuses via a network.

Further, the respective steps described using the flowcharts described above may be performed by a single apparatus, or may be shared to be performed by a plurality of apparatuses.

Furthermore, when a single step includes a plurality of processes, the plurality of processes included in the single step may be performed by a single apparatus, or may be shared to be performed by a plurality of apparatuses.

The present embodiment may also have the following configurations.

### [Appendix]

(1) A communication apparatus, including:
   a communication section that receives a connection request from a terminal that is wirelessly connected to base stations of a plurality of base stations by use of different links; and
   a control section that acquires terminal information from a control entity when the connection request is received or according to a distance to the terminal, the terminal information being information regarding the terminal that is necessary to communicate with the terminal, the control entity controlling the plurality of base stations,
   the communication section transmitting a connection response indicating that the terminal information has been acquired.
(2) The communication apparatus according to (2), in which
   the terminal information includes at least one of information regarding a capability of the terminal or information regarding a setting of security with the terminal.
(3) The communication apparatus according to (2), in which
   after the connection response is transmitted, the control section determines that authentication processing performed between the communication apparatus and the terminal is to be omitted, and
   the authentication processing includes performing, together with the terminal, a procedure of acquiring the information regarding the setting of security with the terminal.
(4) The communication apparatus according to any one of (1) to (3), in which
   when the distance to the terminal exhibits a value less than or equal to a specified value, the control section acquires the terminal information from the control entity.
(5) The communication apparatus according to (4), in which
   the control section acquires the distance to the terminal by measuring an intensity of a signal received from the terminal, by acquiring position information regarding a position of the terminal, or by measuring the position of the terminal.
(6) The communication apparatus according to any one of (1) to (5), in which
   when the connection request is received, the communication section transmits, to the terminal, a signal used to make a request to extend a waiting time for the terminal to wait for reception of the connection response.
(7) The communication apparatus according to (6), in which
   the control section performs control such that the terminal information is acquired and the connection response is transmitted to the terminal within the extended waiting time.
(8) The communication apparatus according to (6) or (7), in which
   when the connection response is not successfully transmitted within the extended waiting time, the control section performs control such that processing of connection established with the terminal is performed in order to acquire the terminal information.
(9) A control apparatus, including:
   a control section that controls a plurality of base stations wirelessly connected to a terminal by use of different links; and
   a retention section that retains terminal information that is information regarding the terminal that is necessary for the plurality of base stations to communicate with the terminal,
   the control section providing the terminal information retained by the retention section to a target base station when an acquisition request made to acquire the terminal information is received from the target base station, the target base station being different from base stations of the plurality of base stations.
(10) The control apparatus according to (9), in which
   the control section provides the terminal information to the target base station, and adds the target base station as a base station to be controlled by the control section.
(11) The control apparatus according to (9) or (10), further including
   a communication section that transmits, to the target base station, report information indicating that information regarding a terminal subordinate to the plurality of base stations is available to provide.
(12) The control apparatus according to (11), in which
   the report information includes identification information regarding the terminal subordinate to the plurality of base stations.
(13) The control apparatus according to any one of (10) to (12), further including
   a communication section that transmits, to the base stations to be controlled, information indicating that the target base station has been added as a base station to be controlled by the control section.
(14) The control apparatus according to any one of (10) to (13), in which
   the control section excludes, from being controlled, a base station included in the base stations to be controlled, the excluded base station being a base station that has not communicated with the terminal for a specified period of time or more.
(15) The control apparatus according to (14), in which
   when the base station is excluded from being controlled, the control section performs, together with the terminal, processing of updating information regarding a setting of security with the terminal.
(16) The control apparatus according to any one of (9) to (15), in which
   the control apparatus is connected to the plurality of base stations and the target base station through a wired or wireless network.
(17) The control apparatus according to any one of (9) to (16), in which
   the control apparatus is a control entity that is provided to one of the plurality of base stations.
(18) A communication apparatus, including:
   a transmitter that transmits a connection request to a target base station that is different from base stations of a plurality of base stations wirelessly connected to the communication apparatus by use of different links, the target base station being capable of communicating with a control entity that controls the plurality of base stations;
   a receiver that receives a connection response that corresponds to the connection request; and
   a control section that omits, when report information is detected in the connection response, processing of causing the target base station to acquire terminal information that is information regarding the communication apparatus that is necessary to communicate with the communication apparatus, the report information indicating that the target base station has acquired the terminal information from the control entity.
(19) The communication apparatus according to (18), in which
   when a signal used to make a request to extend a waiting time to wait for the connection response is received in response to the connection request, the control section extends the waiting time and waits for the connection response until an elapse of the waiting time.
(20) The communication apparatus according to (18) or (19), in which
   the terminal information includes at least one of information regarding a capability of the communication apparatus or information regarding a setting of security with the communication apparatus.
(21) A communication method, including:
   receiving a connection request from a terminal that is wirelessly connected to base stations of a plurality of base stations by use of different links;
   acquiring terminal information from a control entity when the connection request is received or according to a distance to the terminal, the terminal information being information regarding the terminal that is necessary to communicate with the terminal, the control entity controlling the plurality of base stations; and
   transmitting a connection response indicating that the terminal information has been acquired.
(22) A control method, including:
   controlling a plurality of base stations wirelessly connected to a terminal by use of different links;
   retaining terminal information that is information regarding the terminal that is necessary for the plurality of base stations to communicate with the terminal; and
   providing the terminal information to a target base station when an acquisition request made to acquire the terminal information is received from the target base station, the target base station being different from base stations of the plurality of base stations.
(23) A communication method, including:
   transmitting a connection request to a target base station that is different from base stations of a plurality of base stations wirelessly connected to the communication apparatus by use of different links, the target base station being capable of communicating with a control entity that controls the plurality of base stations;
   receiving a connection response that corresponds to the connection request; and
   omitting, when report information is detected in the connection response, processing of causing the target base station to acquire terminal information that is information regarding the communication apparatus that is necessary to communicate with the communication apparatus, the report information indicating that the target base station has acquired the terminal information from the control entity.

### Reference Signs List

- 100: AP (base station, communication apparatus, wireless communication apparatus)
- 110: communication section
- 111: communication control section
- 112: communication storage section
- 113: shared data processing section
- 121: individual data processing section
- 122: signal processing section
- 123: wireless interface section
- 124: amplification section
- 130: control section
- 140: storage section
- 150: antenna
- 160: wired communication section
- 200: AP MLD (terminal apparatus, communication apparatus, wireless communication apparatus)
- 210: communication section
- 211: communication control section
- 212: communication storage section
- 213: shared data processing section
- 221: individual data processing section
- 222: signal processing section
- 223: wireless interface section
- 224: amplification section
- 230: control section
- 240: storage section
- 250: antenna
- 300: AP MLD entity
- 300: control apparatus
- 300A: central control apparatus
- 310: communication section
- 310: communication processing section
- 311: communication control section
- 312: communication storage section
- 313: shared data processing section
- 320: communication processing section
- 330: control section
- 340: storage section
- 804: bus
- 805: input/output interface
- 806: input section
- 807: output section
- 808: storage section
- 809: communication section
- 810: drive
- 811: removable medium
- 900: smartphone
- 901: processor
- 902: memory
- 903: storage
- 904: external connection interface
- 906: camera
- 907: sensor
- 908: microphone
- 909: input device
- 910: display device
- 911: speaker
- 913: wireless communication interface
- 914: antenna switch
- 915: antenna
- 917: bus
- 918: battery
- 919: auxiliary controller
- 920: in-vehicle apparatus
- 921: processor
- 922: memory
- 924: GNSS module
- 925: sensor
- 926: data interface
- 927: content player
- 928: storage medium interface
- 929: input device
- 930: display device
- 931: speaker
- 933: wireless communication interface
- 934: antenna switch
- 935: antenna
- 938: battery
- 940: in-vehicle system (or vehicle)
- 941: in-vehicle network
- 942: vehicle-side module
- 951: controller
- 952: memory
- 954: input device
- 955: display device
- 957: network interface
- 958: wired communication network
- 963: wireless communication interface
- 964: antenna switch
- 965: antenna
- R11: system
- R12: system
- R21: system
- R22: system

## Claims

1. A communication apparatus, comprising:
a communication section that receives a connection request from a terminal that is wirelessly connected to base stations of a plurality of base stations by use of different links; and
a control section that acquires terminal information from a control entity when the connection request is received or according to a distance to the terminal, the terminal information being information regarding the terminal that is necessary to communicate with the terminal, the control entity controlling the plurality of base stations,
the communication section transmitting a connection response indicating that the terminal information has been acquired.

2. The communication apparatus according to claim 1, wherein
the terminal information includes at least one of information regarding a capability of the terminal or information regarding a setting of security with the terminal.

3. The communication apparatus according to claim 2, wherein
after the connection response is transmitted, the control section determines that authentication processing performed between the communication apparatus and the terminal is to be omitted, and
the authentication processing includes performing, together with the terminal, a procedure of acquiring the information regarding the setting of security with the terminal.

4. The communication apparatus according to claim 1, wherein
when the distance to the terminal exhibits a value less than or equal to a specified value, the control section acquires the terminal information from the control entity.

5. The communication apparatus according to claim 4, wherein
the control section acquires the distance to the terminal by measuring an intensity of a signal received from the terminal, by acquiring position information regarding a position of the terminal, or by measuring the position of the terminal.

6. The communication apparatus according to claim 1, wherein
when the connection request is received, the communication section transmits, to the terminal, a signal used to make a request to extend a waiting time for the terminal to wait for reception of the connection response.

7. The communication apparatus according to claim 6, wherein
the control section performs control such that the terminal information is acquired and the connection response is transmitted to the terminal within the extended waiting time.

8. The communication apparatus according to claim 6, wherein
when the connection response is not successfully transmitted within the extended waiting time, the control section performs control such that processing of connection established with the terminal is performed in order to acquire the terminal information.

9. A control apparatus, comprising:
a control section that controls a plurality of base stations wirelessly connected to a terminal by use of different links; and
a retention section that retains terminal information that is information regarding the terminal that is necessary for the plurality of base stations to communicate with the terminal,
the control section providing the terminal information retained by the retention section to a target base station when an acquisition request made to acquire the terminal information is received from the target base station, the target base station being different from base stations of the plurality of base stations.

10. The control apparatus according to claim 9, wherein
the control section provides the terminal information to the target base station, and adds the target base station as a base station to be controlled by the control section.

11. The control apparatus according to claim 9, further comprising
a communication section that transmits, to the target base station, report information indicating that information regarding a terminal subordinate to the plurality of base stations is available to provide.

12. The control apparatus according to claim 11, wherein
the report information includes identification information regarding the terminal subordinate to the plurality of base stations.

13. The control apparatus according to claim 10, further comprising
a communication section that transmits, to the base stations to be controlled, information indicating that the target base station has been added as a base station to be controlled by the control section.

14. The control apparatus according to claim 10, wherein
the control section excludes, from being controlled, a base station included in the base stations to be controlled, the excluded base station being a base station that has not communicated with the terminal for a specified period of time or more.

15. The control apparatus according to claim 14, wherein
when the base station is excluded from being controlled, the control section performs, together with the terminal, processing of updating information regarding a setting of security with the terminal.

16. The control apparatus according to claim 9, wherein
the control apparatus is connected to the plurality of base stations and the target base station through a wired or wireless network.

17. The control apparatus according to claim 9, wherein
the control apparatus is a control entity that is provided to one of the plurality of base stations.

18. A communication apparatus, comprising:
a transmitter that transmits a connection request to a target base station that is different from base stations of a plurality of base stations wirelessly connected to the communication apparatus by use of different links, the target base station being capable of communicating with a control entity that controls the plurality of base stations;
a receiver that receives a connection response that corresponds to the connection request; and
a control section that omits, when report information is detected in the connection response, processing of causing the target base station to acquire terminal information that is information regarding the communication apparatus that is necessary to communicate with the communication apparatus, the report information indicating that the target base station has acquired the terminal information from the control entity.

19. The communication apparatus according to claim 18, wherein
when a signal used to make a request to extend a waiting time to wait for the connection response is received in response to the connection request, the control section extends the waiting time and waits for the connection response until an elapse of the waiting time.

20. The communication apparatus according to claim 18, wherein
the terminal information includes at least one of information regarding a capability of the communication apparatus or information regarding a setting of security with the communication apparatus.

21. A communication method, comprising:
receiving a connection request from a terminal that is wirelessly connected to base stations of a plurality of base stations by use of different links;
acquiring terminal information from a control entity when the connection request is received or according to a distance to the terminal, the terminal information being information regarding the terminal that is necessary to communicate with the terminal, the control entity controlling the plurality of base stations; and
transmitting a connection response indicating that the terminal information has been acquired.

22. A control method, comprising:
controlling a plurality of base stations wirelessly connected to a terminal by use of different links;
retaining terminal information that is information regarding the terminal that is necessary for the plurality of base stations to communicate with the terminal; and
providing the terminal information to a target base station when an acquisition request made to acquire the terminal information is received from the target base station, the target base station being different from base stations of the plurality of base stations.

23. A communication method, comprising:
transmitting a connection request to a target base station that is different from base stations of a plurality of base stations wirelessly connected to the communication apparatus by use of different links, the target base station being capable of communicating with a control entity that controls the plurality of base stations;
receiving a connection response that corresponds to the connection request; and
omitting, when report information is detected in the connection response, processing of causing the target base station to acquire terminal information that is information regarding the communication apparatus that is necessary to communicate with the communication apparatus, the report information indicating that the target base station has acquired the terminal information from the control entity.
